# EUROPÄISCHE PATENTSCHRIFT

(11) **EP 2 932 339 B1**
(45) Veröffentlichungstag und Bekanntmachung des Hinweises auf die Patenterteilung: **15.07.2020**
(21) Anmeldenummer: 13811789.0
(22) Anmeldetag: 13.12.2013
(51) Int. Cl.: G05B 19/418

(54) **VERFAHREN ZUM COMPUTERGESTÜTZTEN NACHBILDEN EINER PRODUKTIONSANLAGE, VERFAHREN ZUR INBETRIEBNAHME EINER PRODUKTIONSANLAGE, KONFIGURATIONSEINRICHTUNG UND PRODUKTIONSANLAGE**
METHOD FOR THE COMPUTER-ASSISTED EMULATION OF A PRODUCTION PLANT, METHOD FOR ACTIVATING A PRODUCTION PLANT, CONFIGURATION DEVICE AND PRODUCTION PLANT
PROCÉDÉ DE REPRODUCTION ASSISTÉE PAR ORDINATEUR D'UNE INSTALLATION DE PRODUCTION, PROCÉDÉ DE MISE EN ROUTE D'UNE INSTALLATION DE PRODUCTION, DISPOSITIF DE CONFIGURATION ET INSTALLATION DE PRODUCTION

(30) Priorität: 17.12.2012 DE 102012024582
(43) Veröffentlichungstag der Anmeldung: 21.10.2015
(73) Patentinhaber: SEW-EURODRIVE GmbH & Co. KG, 76646 Bruchsal (DE)
(72) Erfinder: ESCURIOLA ETTINGSHAUSEN, Manuel, 65347 Eltville (DE); KESSELRING, Jens, 68799 Reilingen (DE); KÖVARI, Lars, 76351 Linkenheim-Hochstetten (DE)
(86) Internationale Anmeldenummer: PCT/EP2013/003769
(87) Internationale Veröffentlichungsnummer: WO 2014/095012

(56) Entgegenhaltungen:
- US-A1- 2006 080 827
- US-A1- 2008 154 456
- PAPROTNY I ET AL: "Reducing model creation cycle time by automated conversion of a CAD AHMS layout design", WINTER SIMULATION CONFERENCE PROCEEDINGS, 1999 PHOENIX, AZ, USA 5-8 DEC. 1999, PISCATAWAY, NJ, USA,IEEE, US, vol. 1, 5 December 1999 (1999-12-05), pages 779-783, XP010368038, ISBN: 978-0-7803-5780-8

## Beschreibung

Die Erfindung betrifft ein Verfahren zum computergestützten Nachbilden einer Produktionsanlage, ein Verfahren zur Inbetriebnahme einer Produktionsanlage, eine Konfigurationseinrichtung und eine Produktionsanlage.

Derartige Verfahren sind bekannt und werden eingesetzt, um den Betriebsablauf auf einer Anlage vor der eigentlichen Inbetriebnahme zu überprüfen. Auf diese Weise können Fehler, die bis zum Produktionsstart eliminiert werden müssen, im Vorfeld erkannt und beseitigt werden.

Aus US 2006/0080827 A1 sind ein Zusammenbausystem, eine Zusammenbaueinheit, ein Layoutanordnungssytem und ein Layoutanordnungsverfahren bekannt, bei welchen reale Einheiten jeweils CPUs aufweisen und über Transportsignalleitungen zur Übertragung von Verbindungsbestätigungssignalen und über Informationsmitteilungsleitungen zur Übertragung eindeutiger Verbindungsdaten miteinander verbunden sind.

Aus US 2008/0154456 A1 sind ein Verfahren zum Betreiben eines Systems und ein fahrerloses Transportsystem bekannt, wobei ein Fahrzeug bei Initialisierung Daten des Streckenabschnitts, in dem es sich befindet, gemeinsam mit allen Fahrzeugen erhält, wobei das Fahrzeug eine Information, die an es gerichtet oder auf es anwendbar ist, extrahiert.

Aus Paprotny I et al.: "Reducing model creation cycle time by automated conversion of a CAD AHMS layout design", Winter Simulation Conference Proceedings, 1999, Phoenix, AZ, USA, 5-8 Dec. 1999, Piscataway, NJ, USA, IEEE, US Bd. 1, 5.12.1999 (1999-12-05), Seiten 779 - 783, XP010368038, ISBN: 978-0-7803-5780-8 ist ein System bekannt, das CAD Daten automatisiert in Simulationsdaten konvertieren kann. Dazu weist das System eine Fehlererkennung auf, wobei die Fehler im CAD Layout anzeigbar und manuell korrigierbar sind, bevor eine Simulationsdatei erzeugt wird.

Der Erfindung liegt die Aufgabe zugrunde, die ingenieursmäßige Projektierung und/oder Inbetriebnahme von Produktionsanlagen zu automatisieren.

Diese Aufgabe wird erfindungsgemäß bei einem Verfahren durch die Merkmale des Anspruchs 1, bei einem Verfahren zur Inbetriebnahme einer Produktionsanlage durch die Merkmale von Anspruch 14, bei einer Konfigurationsvorrichtung durch die Merkmale des Anspruchs 15 und bei einer Produktionsanlage durch die Merkmale des Anspruchs 20 gelöst.

Wichtige Merkmale der Erfindung eines Verfahrens zum computergestützten Nachbilden einer Produktionsanlage, wobei die Produktionsanlage wenigstens eine Förderstrecke aufweist, sind, dass CAD-Streckendaten in eine Verarbeitungseinheit eingelesen werden und dass aus den CAD-Streckendaten ein Streckenlayout computerimplementiert generiert wird, welches einen logischen Förderfluss der Förderstrecke computerlesbar beschreibt. Von Vorteil ist dabei, dass mit dem Streckenlayout Daten vorliegen, die zu einer computergestützten Simulation, Anzeige, Überwachung und/oder Ansteuerung eines Fahrbetriebs auf der Förderstrecke und/oder eines Förderflusses auf der Förderstrecke weiterverwendbar sind. Somit ermöglicht die Erfindung, ein zur Parametrierung, Überprüfung, Simulation, Ansteuerung und/oder Modifikation von Bewegungsabläufen verwendbares Streckenlayout bereitzustellen. Die Projektierung und die Inbetriebnahme einer Produktionsanlage sind somit erheblich vereinfachbar. Zusätzlich ist hierbei vorgesehen, dass die CAD-Streckendaten fehlerbehaftet sind, dass ein Regelwerk, beispielsweise das weiter unten erwähnte Regelwerk, Regeln einer Fehlerkorrektur der fehlerbehafteten CAD-Streckendaten aufweist und dass diese Regeln auf die CAD-Streckenddaten zur Erzeugung eines Streckenlayouts, beispielsweise des bereits erwähnten Streckenlayouts, computerimplementiert angewendet werden. Die CAD-Streckendaten können beispielsweise fehlerbehaftet sein, weil die CAD-Modelle nicht mit der erforderlichen Genauigkeit erstellt wurden. Die Hinterlegung von Regeln hat den Vorteil, dass die CAD-Streckendaten in einem automatisierten Verfahren zur Verwendung in einer nachgelagerten Ansteuerung aufbereitbar sind.

Bei einer Ausgestaltung der Erfindung kann vorgesehen sein, dass zur Generierung des Streckenlayouts im logischen Förderfluss aufeinanderfolgende Streckenelemente der CAD-Streckendaten logisch verknüpft werden. Von Vorteil ist dabei, dass ein Zusammenhang zwischen den Streckenelementen ermittelbar und definierbar ist. Somit ist in computerlesbarer Weise eine Abfolge der Streckenelemente im logischen Förderfluss definierbar. Besonders günstig ist es, wenn die Streckenelemente hierbei an Verbindungspunkten, vorzugsweise an allen Verbindungspunkten jedes Streckenelements, verknüpft werden. So lassen sich auf einfache Weise zusammenhängende Abschnitte des Streckenlayouts bilden, die einen logischen Förderfluss beschreiben oder vorgeben.

Bei einer Ausgestaltung der Erfindung kann vorgesehen sein, dass das Streckenlayout zwei- oder dreidimensionale Positionsangaben zu Streckenelementen des Streckenlayouts enthält. Von Vorteil ist dabei, dass das Streckenlayout zur Regelung einer Ist-Position von Transporteinheiten auf eine Soll-Position verwendbar ist. Hierzu kann die jeweilige Transporteinheit zur Extraktion von Soll-Positionen für die eigene, vorzugsweise gemessene oder ermittelte, Ist-Position eingerichtet sein.

Bei einer Ausgestaltung der Erfindung kann vorgesehen sein, dass aus dem Streckenlayout eine zumindest lokal eindimensionale, computerlesbare Beschreibung des logischen Förderflusses abgeleitet wird. Somit ist eine intrinsische Beschreibung der Förderstrecke, also ohne Bezug auf die Lage, den Verlauf und/oder die Einbettung der Förderstrecke im Raum, bereitstellbar und/oder verwendbar. Bei einer lokal eindimensionalen Beschreibung sind Verzweigungen und/oder Weichen zulässig, und die Beschreibung ist jenseits der Verzweigungen und/oder Weichen eindimensional. Eine Abfolge im logischen Förderfluss ist somit mit minimalem Datenaufwand beschreibbar oder vorgebbar.

Bei einer Ausgestaltung der Erfindung kann vorgesehen sein, dass das Streckenlayout zumindest in Parameterform an eine Fahrzeugsteuerung einer in der Förderstrecke fahrenden Transporteinheit übergeben wird. Von Vorteil ist dabei, dass die Transporteinheiten automatisiert parametrierbar, einrichtbar und/oder in Betrieb nehmbar sind. Manuelle Bearbeitungsschritte sind hierbei weitestgehend oder sogar vollständig verzichtbar.

Hierbei kann vorgesehen sein, dass die Fahrzeugsteuerung zur Steuerung der Transporteinheit anhand eines Vergleichs einer Ist-Position der Transporteinheit mit einer durch das Streckenlayout beschriebenen Soll-Position eingerichtet ist. Von Vorteil ist dabei, dass die zweidimensionalen Positionsinformationen des Streckenlayouts, die aus den CAD-Streckendaten abgeleitet wurden, zur Spurführung verwendbar sind.

Bei einer Ausgestaltung der Erifnung kann vorgesehen sein, dass das Streckenlayout und/oder die oder eine zumindest lokal eindimensionale, computerlesbare Beschreibung des logischen Förderflusses an eine Steuerungseinheit übergeben und zu einer Ansteuerung von Transporteinheiten der Produktionsanlage verwendet oder bereitgestellt wird. Von Vorteil ist dabei, dass eine manuelle Inbetriebnahme der Produktionsanlage verzichtbar ist.

Alternativ oder zusätzlich sind wichtige Merkmale der Erfindung eines Verfahrens zum computergestützten Nachbilden einer Produktionsanlage, wobei die Produktionsanlage wenigstens eine Förderstrecke aufweist, dass CAD-Streckendaten in eine Verarbeitungseinheit eingelesen werden, dass die CAD-Streckendaten in einer virtuellen Realität automatisiert dargestellt werden und dass Ansteuerungsdaten an einer für wenigstens ein Element aus der Gruppe von Materialflussrechner, übergeordnete Steuerungseinheit, externe Simulationseinheit und Stücklisten-/Kalkulationseinheit ausgebildete Schnittstelle automatisiert bereitgestellt werden. Von Vorteil ist dabei, dass die Produktionsanlage in einer virtuellen Realität nachgebildet werden kann. Dies ermöglicht es, die Steuerungsprogramme der Produktionsanlage entsprechend zu parametrieren.

Wichtige Merkmale der Erfindung eines Verfahrens zum computergestützten Nachbilden einer Produktionsanlage, insbesondere wie zuvor beschrieben und/oder nach Anspruch 1, wobei die Produktionsanlage wenigstens eine Förderstrecke aufweist, sind alternativ oder zusätzlich, dass CAD-Streckendaten in eine Verarbeitungseinheit eingelesen werden, wobei die CAD-Streckendaten zumindest Streckenelemente umfassen, aus denen die Förderstrecke gebildet ist, und dass die Streckenelemente mit einem Regelwerk automatisiert zu einem Streckenlayout verknüpft und zu einer computergestützten Nachbildung der Förderstrecke bereitgestellt werden. Von Vorteil ist dabei, dass das Streckenlayout automatisiert gewinnbar ist. Somit kann der insgesamt benötigt Arbeitsaufwand bis zum Start der Anlagensimulation reduziert werden. Auch sind so Zuordnungsfehler beim Erstellen des Streckenlayouts vermeidbar.

Die Verarbeitungseinheit ist bei der Erfindung bevorzugt als Datenverarbeitungseinheit oder auf sonstige Weise zum automatisierten Ablauf ausgebildet.

Zur automatischen Erzeugung des Streckenlayouts aus den CAD-Streckendaten sind computergestützt auswertbare Regeln hinterlegt, die auf die CAD-Streckendaten angewendet werden. Die Begriffe erstes Streckenelement, zweites Streckenelement, weiteres Streckenelement sind in dieser Beschreibung als Platzhalter in den jeweils beschriebenen Regeln zu verstehen.

Bei einer vorteilhaften Ausgestaltung kann vorgesehen sein, dass ein erster Verbindungspunkt eines ersten Streckenelements mit einem zweiten Verbindungspunkt eines zweiten Streckenelements automatisiert verknüpft wird, wenn sich der erste Verbindungspunkt des ersten Streckenelements innerhalb eines ersten Abstandschwellwerts zu dem zweiten Verbindungspunkt des zweiten Streckenelements befindet. Von Vorteil ist dabei, dass in der CAD-Zeichnung separate Streckenelemente automatisiert als zueinander in der Förderstrecke benachbart erkennbar sind und erkannt werden. Bevorzugt ist der Abstandsschwellwert so gewählt, dass zufällige Lücken in der Förderstrecke aufgrund von Zeichnungsungenauigkeiten in den CAD-Streckendaten von absichtlich gelassenen Lücken, über welche keine Förderstrecke verläuft, automatisiert unterscheidbar sind. Beispielsweise kann der erste Abstandsschwellwert einen Bruchteil, beispielsweise weniger als die Hälfte oder weniger als ein Zehntel, einer durchschnittlichen oder minimalen Länge der Streckenelemente betragen.

Bei einer vorteilhaften Ausgestaltung kann vorgesehen sein, dass ein erster Verbindungspunkt eines ersten Streckenelements mit einem zweiten Verbindungspunkt eines zweiten Streckenelements verknüpft wird, wenn sich der erste Verbindungspunkt des ersten Streckenelements innerhalb eines zweiten Abstandschwellwerts zu dem zweiten Verbindungspunkt des zweiten Streckenelements befindet und wenn sich kein dritter Verbindungspunkt eines dritten Streckenelements innerhalb des oder eines ersten Abstandsschwellwerts zu dem ersten und/oder zweiten Verbindungspunkt befindet. Von Vorteil ist dabei, dass unverzweigte Verbindungen, die zeichnungsbedingt eine Lücke aufweisen, von Verzweigungen automatisiert unterscheidbar sind.

Somit kann für die Streckenelemente der CAD-Streckendaten automatisiert und vorzugsweise rekursiv oder nacheinander geprüft werden, ob sich ein Verbindungspunkt eines Streckenelements innerhalb eines ersten Abstandschwellwerts zu einem Verbindungspunkt eines weiteren Streckenelements befindet.

Es kann vorgesehen sein, dass Weichen aus den CAD-Streckendaten entfernt werden, bevor das Streckenlayout erstellt wird. Dies hat den Vorteil, dass eine Erkennung und Unterscheidung der unterschiedlichen Weichentypen, die auftreten können, verzichtbar ist.

Alternativ oder unterstützend kann vorgesehen sein, dass Weichentypen mit einem Merkmals- und/oder Mustererkennungsalgorithmus identifiziert und/oder klassifiziert werden. Die ermöglicht eine nochmals verbesserte Treffsicherheit bei der automatisierten Einrichtung von Verzweigungspunkten im Streckenlayout.

Bei einer vorteilhaften Ausgestaltung kann vorgesehen sein, dass ein Weichenelement oder ein Verzweigungselement in das Streckenlayout automatisiert eingefügt wird, wenn ein Verbindungspunkt eines ersten Streckenelements mit jeweils einem Verbindungspunkt von wenigstens zwei weiteren Streckenelementen verknüpft ist. Durch die Einfügung werden die beteiligten Verbindungspunkte somit indirekt (über das eingefügte Element) verknüpft. Von Vorteil ist dabei, dass Verzweigungen automatisiert erkannt und in das Streckenlayout aufgenommen werden können, ohne dass eine aufwändige Merkmals- oder Mustererkennung erforderlich wäre. Generell unterscheidet sich ein Verzweigungselement von einem Weichenelement dadurch, dass bei einem Verzweigungselement dauerhaft wenigstens drei Streckenelemente verbunden sind, während bei einem Weichenelement durch unterschiedliche Zustände unterschiedliche Verbindungen einzelner Streckenelemente miteinander herstellbar sind.

Bei einer vorteilhaften Ausgestaltung kann vorgesehen sein, dass für die Streckenelemente der CAD-Streckendaten, die wenigstens einen Verbindungspunkt aufweisen, zu dem sich kein Verbindungspunkt eines weiteren Streckenelements innerhalb des oder eines (ersten) Abstandsschwellwerts befindet, automatisiert geprüft wird, ob sich dieser Verbindungspunkt des Streckenelements innerhalb eines zweiten Abstandschwellwerts zu einem Verbindungspunkt eines weiteren Streckenelements befindet. Somit sind Verzweigungen von zufälligen Lücken automatisiert unterscheidbar. Bevorzugt ist der zweite Abstandsschwellwert größer als der erste Abstandsschwellwert gewählt. Befindet sich innerhalb des zweiten Abstandsschwellwertes nur ein einziger weiterer Verbindungspunkt, so kann vorgesehen sein, dass eine ungewollte Lücke in der CAD-Zeichnung automatisch erkannt und dieser weitere Verbindungspunkt mit dem zuvor genannten Verbindungspunkt automatisch verknüpft wird.

Bei einer vorteilhaften Ausgestaltung kann vorgesehen sein, dass zu einem ersten Verbindungspunkt eines ersten Streckenelements, zu welchem innerhalb des zweiten Abstandsschwellwertes kein Verbindungspunkt eines weiteren Streckenelements auffindbar ist, automatisiert geprüft wird, welches Streckenelement innerhalb eines dritten Abstandschwellwerts zu dem ersten Verbindungspunkt liegt. Von Vorteil ist dabei, dass auch größere Lücken im Streckenverlauf in den CAD-Streckendaten, die sich beispielsweise nach dem Löschen eines Weichenelements ergeben haben, verarbeitbar sind. Vorzugsweise ist der dritte Abstandsschwellwert größer als der zweite Abstandsschwellwert und besonders bevorzugt so groß gewählt, dass alle auftretenden oder verwendbaren Weichenelemente eine Ausdehnung aufweisen, die kleiner als der dritte Abstandsschwellwert ist. Somit sind die Verbindungspunkte, die über ein Verzweigungs- oder Weichenelement verbunden sind, automatisch identifizierbar.

Bei einer vorteilhaften Ausgestaltung kann vorgesehen sein, dass ein erster Verbindungspunkt eines ersten Streckenelements mit einem zweiten Verbindungspunkt eines zweiten Streckenelements verknüpft wird, wenn der erste Verbindungspunkt innerhalb eines oder des vierten Abstandschwellwertes zu dem zweiten Streckenelement und der zweite Verbindungspunkt innerhalb des vierten Abstandschwellwertes zu dem ersten Streckenelement liegt. Somit ist ein automatisiertes Verfahren zur Verbindung von Streckenelementen ausführbar, welches seitlich in Bezug auf eine Verlaufsrichtung der Förderstrecke zueinander versetzte Streckenelemente automatisch identifiziert und verbindet. Der vierte Abstandsschwellwert kann beispielsweise gleich dem zweiten Abstandsschwellwert gewählt sein.

Bei einer vorteilhaften Ausgestaltung kann vorgesehen sein, dass ein Parameter eines Streckenelements, bei welchem ein erster Verbindungspunkt mit genau einem zweiten Verbindungspunkt eines weiteren Streckenelements verknüpft ist, verändert wird, bis der erste Verbindungspunkt innerhalb des ersten Abstandschwellwertes zu dem zweiten Verbindungspunkt liegt. Von Vorteil ist dabei, dass zufällige Überlappungen von Streckenelementen in den CAD-Streckendaten im Streckenlayout automatisch beseitigbar sind.

Bei einer vorteilhaften Ausgestaltung kann vorgesehen sein, dass ein erstes Streckenelement an einem Teilungspunkt in zwei weitere Streckenelemente unterteilt wird, wenn ein Verbindungspunkt eines zweiten Streckenelements innerhalb eines fünften Abstandschwellwertes zu dem ersten Streckenelement aber außerhalb eines sechsten Abstandsschwellwertes zu den Verbindungspunkten des ersten Streckenelements liegt, wobei jedes der zwei weiteren Streckenelemente einen Verbindungspunkt von dem ersten Streckenelement erhält und einen weiteren Verbindungspunkt an dem Teilungspunkt erhält, wobei diese weiteren Verbindungspunkte miteinander verknüpft werden. Von Vorteil ist dabei, dass fehlende Verzweigungspunkte an Stellen, an denen ein zweites Streckenelemente auf ein erstes Streckenelement stößt, automatisch erzeugbar sind. Der fünfte Abstandsschwellwert kann beispielsweise gleich dem ersten oder zweiten Abstandsschwellwert gewählt sein. Der sechste Abstandsschwellwert kann beispielsweise gleich dem zweiten oder dritten Abstandsschwellwert gewählt sein. Der sechste Abstandsschwellwert kann ein Bruchteil, beispielsweise die Hälfte oder ein Drittel, eine typischen, durchschnittlichen oder mininmalen Abmessung der Streckenelemente betragen. Somit ist leicht automatisch erkennbar, wenn ein Verbindungspunkt des zweiten Streckenelements an dem ersten Streckenelement in etwa mittig zwischen dessen Verbindungspunkten liegt.

Bei einer vorteilhaften Ausgestaltung kann vorgesehen sein, dass mit einer Fahrtrichtungsinformation eines Streckenelements ein Verbindungspunkt dieses Streckenelements als ein Startpunkt und ein weiterer Verbindungspunkt dieses Streckenelements als ein Endpunkt charakterisiert wird. Von Vorteil ist dabei, dass automatische Konsistenzprüfungen durchführbar sind. Beispielsweise kann geprüft werden, ob im Streckenlayout Startpunkte eines Streckenelements mit Endpunkten des benachbarten Streckenelements verbunden sind.

Bei einer vorteilhaften Ausgestaltung kann vorgesehen sein, dass zu einem ersten Streckenelement eine Fahrtrichtungsinformation aus einer Fahrtrichtungsinformation eines zweiten Streckenelements derart abgeleitet wird, dass ein Startpunkt mit einem Endpunkt verknüpft wird. Von Vorteil ist dabei, dass fehlende Fahrtrichtungsinformationen automatisch gewinnbar oder automatisch rekonstruierbar sind.

Bei einer vorteilhaften Ausgestaltung kann vorgesehen sein, dass an einem Verbindungspunkt eines Streckenelements eine Tangente an dieses Streckenelement berechnet wird. Von Vorteil ist dabei, dass Streckenelemente, die fehlerhaft in den CAD-Streckendaten beabstandet zu einem Streckenelement angeordnet sind, identifizierbar sind. Auch kann anhand der berechneten Tangente zwischen mehreren Verbindungspunkten anderer Streckelemente ein Verbindungspunkt zur Verknüpfung ausgewählt werden.

Bei einer vorteilhaften Ausgestaltung kann vorgesehen sein, dass ein Verzweigungs-, Weichen- und/oder Kreuzungselement automatisch anhand der berechneten Tangenten der beteiligten Verbindungspunkte ausgewählt wird/werden. Von Vorteil ist dabei, dass Verzweigungspunkte mit geringer Fehlerquote im Streckenlayout an den richtigen Positionen erzeugbar sind. Die Erfindung macht sich zunutze, dass Weichen und Verzweigungen durch die relative Lage der Tangenten an den Verbindungspunkten für die automatische Verarbeitung beschreibbar und/oder klassifizierbar sind. Hierbei können die Tangente an einem Verbindungspunkt durch Analyse des Verlaufs des zugehörigen Streckenelements in unmittelbarer Nachbarschaft zu dem Verbindungspunkt berechnet oder ermittelt werden.

Bei einer vorteilhaften Ausgestaltung kann vorgesehen sein, dass zu dem Streckenlayout ein Steuerprogramm für auf der Förderstrecke verfahrbare Transporteinheiten erstellt und/oder ausgegeben wird. Von Vorteil ist dabei, dass eine Simulation des Anlagenbetriebs nach Abschluss der automatisierten Aufbereitung der CAD-Streckendaten ausführbar ist.

Bei einer vorteilhaften Ausgestaltung kann vorgesehen sein, dass mit dem Steuerprogramm ein Materialflussrechner angesteuert wird. Von Vorteil ist dabei, dass ein Materialfluss auf der Produktionsanlage mit dem Ergebnis der Aufbereitung oder Verarbeitung der CAD-Streckendaten simulierbar oder im Betrieb steuerbar ist.

Bei einer vorteilhaften Ausgestaltung kann vorgesehen sein, dass mit dem Steuerprogramm eine Steuereinheit der Produktionsanlage und/oder eine Simulationseinheit, die zu einer Simulation eines Betriebsablaufs einer Förderstrecke mit Transporteinheiten eingerichtet ist, programmiert wird/werden. Von Vorteil ist dabei, dass die aufbereiteten CAD-Streckendaten weiterverarbeitbar sind.

Bei einer vorteilhaften Ausgestaltung kann vorgesehen sein, dass die Streckenelemente aus den CAD-Streckendaten extrahiert und in einen separaten Layer geschrieben werden. Von Vorteil ist dabei, dass die Streckenelemente einzeln zur Erzeugung des Streckenlayouts verarbeitbar sind. Durch die Verwendung von Layern kann erreicht werden, dass die Positionsinformation der Streckenelemente bei der Extraktion aus den CAD-Streckendaten erhalten bleibt.

Bei einer vorteilhaften Ausgestaltung kann vorgesehen sein, dass eine Fehlerprüfung durchgeführt wird, in welcher für jedes Streckenelement eine eindeutige und/oder mit verknüpften Streckenelementen kompatible Zuordnung einer Fahrtrichtungsinformation geprüft wird. Somit sind Zuordnungsfehler automatisch erkennbar.

Die Erfindung findet eine Anwendung bei einem Verfahren zur Inbetriebnahme einer Produktionsanlage mit wenigstens einer entlang einer Förderstrecke verfahrbaren Transporteinheit und eine Steuerungseinheit, wobei mit einem erfindungsgemäßen Verfahren zum Nachbilden einer Produktionsanlage, insbesondere wie zuvor beschreiben und/oder nach einem der auf ein Verfahren zum computergestützten Nachbilden einer Produktionsanlage gerichteten Ansprüche, ein Streckenlayout erzeugt und Daten des Streckenlayouts an die wenigstens eine Transporteinheit und/oder die Steuerungseinheit übergeben werden. Bevorzugt werden an die wenigstens eine Transporteinheit zweidimensionale Positionsangaben zu Streckenelementen des Streckenlayouts und an die Steuerungseinheit zumindest lokal eindimensionale Positionsangaben übermittelt. Von Vorteil ist dabei, dass minimal erforderlcihe Datenmengen übertragbar sind.

Wichtige Merkmale der Erfindung einer Konfigurationseinrichtung, mit einem Dateneingang zur Eingabe von CAD-Streckendaten und einem Datenausgang zur Ausgabe eines Streckenlayouts, sind, dass eine Verarbeitungseinheit zur Ausführung eines erfindungsgemäßen Verfahrens, insbesondere wie zuvor beschrieben und/oder nach einem der auf ein Verfahren zum Nachbilden einer Produktionsanlage gerichteten Ansprüche, ausgebildet und eingerichtet ist. Von Vorteil ist dabei, dass ein Mittel zur automatisierten, beispielsweise computergestützten, Abarbeitung des erfindungsgemäßen Verfahrens bereitstellbar ist. Beispielsweise kann die Konfigurationseinrichtung durch einen zur Ausführung des erfindungsgemäßen Verfahrens eingerichteten, insbesondere durch Konfiguration und/oder Programmierung eingerichteten, Computer gegeben sein.

Bei einer vorteilhaften Ausgestaltung kann vorgesehen sein, dass die CAD-Streckendaten mit je zwei Verbindungspunkten versehene Streckenelemente aufweisen. Von Vorteil ist dabei, dass eine automatische Verknüpfung zusammengehörender Streckenelemente ausführbar ist. Vorzugsweise weisen die CAD-Streckendaten zusätzlich mit Metadaten, beispielsweise Fahrtrichtungsinformationen, Positionen von Wegmarken und dergleichen streckenbezogenen Metadaten, versehene Streckenelemente auf.

Bei einer vorteilhaften Ausgestaltung kann vorgesehen sein, dass ein Abstandbestimmungsmittel zur Bestimmung eines Abstands zwischen einem Verbindungspunkt eines Streckenelements und einem weiteren Streckenelement ausgebildet ist. Von Vorteil ist dabei, dass zueinander benachbarte Streckenelemente identifizierbar sind. Beispielsweise kann das Abstandbestimmungsmittel zur Berechnung oder Ermittlung eines euklidischen Abstandes der Verbindungspunkt oder zur Berechnung oder Ermittlung eines Maximums einer Differenz der X-Koordinaten der Verbindungspunkte einerseits und einer Differenz der Y-Koordinaten der Verbindungspunkte andererseits ausgebildet sein.

Alternativ oder zusätzlich kann bei einer vorteilhaften Ausgestaltung vorgesehen sein, dass ein Vergleichsmittel zum Vergleich eines Abstands zwischen einem Verbindungspunkt eines Streckenelements und einem weiteren Streckenelement mit einem Abstandschwellwert ausgebildet ist. Beispielsweise kann dieser Abstandschwellwert wenigstens ein Element aus der Gruppe von erster, zweiter, dritter, vierter, fünfter und/oder sechster Abstandschwellwert sein. Von Vorteil ist dabei, dass ein automatisches Unterscheiden von zusammengehörigen Streckenelemente einerseits und nicht zusammengehörigen Streckenelementen andererseits ausführbar ist. Der Abstand kann zuvor mit dem beschriebenen Abstandbestimmungsmittel ermittelt worden sein.

Bei einer vorteilhaften Ausgestaltung kann vorgesehen sein, dass ein Variationsmittel zur Variation eines Parameters eines Streckenelements eingerichtet ist. Diese Parameter können beispielsweise die Länge oder der Krümmungsradius oder dergleichen die Form eines Streckenelements beschreibende Maßangaben sein. Von Vorteil ist dabei, dass Darstellungsfehler in den CAD-Streckendaten automatisch korrigierbar sind. Bevorzugt wird das Streckenlayout korrigiert, bis Unstetigkeiten, also beispielsweise seitliche Versetzungen, und Knicke, also beispielsweise Unstetigkeiten in einer ersten Ableitung an den Verlauf der Förderstrecke, in der Förderstrecke oder den Förderstrecken eliminiert oder eliminierbar sind.

Bei einer vorteilhaften Ausgestaltung kann vorgesehen sein, dass ein Tangentenberechnungsmittel zur Berechnung einer Tangente in einem Verbindungspunkt eines Streckenelements an das Streckenelement ausgebildet ist. Von Vorteil ist dabei, dass ein Mittel zur Extrapolation des Streckenverlaufs ausgebildet sind, mit denen zueinander benachbarte, durch zufällige oder absichtlich gelassene Lücken voneinander beabstandete Streckenelemente als zusammengehörig identifzierbar und - beispielsweise über ein Weichenelement - verknüpfbar sind.

Bei einer vorteilhaften Ausgestaltung kann vorgesehen sein, dass ein Unterteilungsmittel zur Teilung eines Streckenelements an einem Teilungspunkt in zwei weitere Streckenelemente ausgebildet ist. Von Vorteil ist dabei, dass Verzweigungspunkte, die in den CAD-Streckendaten fehlen, nachträglich rekonstruierbar sind.

Bei einer vorteilhaften Ausgestaltung kann vorgesehen sein, dass ein Zuweisungsmittel zur Zuweisung einer Fahrtrichtungsinformation zu einem Streckenelement ausgebildet ist. Von Vorteil ist dabei, dass das Streckenlayout mit einer Fahrtrichtungsinformation ausrüstbar ist, beispielsweise für eine Fehler- und/oder Plausibilitätsprüfung.

Bei einer vorteilhaften Ausgestaltung kann vorgesehen sein, ein Materialflussrechner und/oder ein Kalkulationswerkzeug und/oder eine Steuereinheit und/oder ein Simulationswerkzeug an den Datenausgang angeschlossen oder anschließbar ist/sind. Von Vorteil ist dabei, dass eine computergestützte Weiterverarbeitung des berechneten Streckenlayouts ausführbar ist.

Bei einer vorteilhaften Ausgestaltung kann vorgesehen sein, dass ein Speichermittel, insbesondere eine Datenbank, mit Metadaten zu Streckenelementen der CAD-Streckendaten an den Dateneingang oder einen weiteren Dateneingang anschließbar ist. Von Vorteil ist dabei, dass zusätzliche Informationen zur Identifizierung und/oder Verknüpfung der Streckenelemente bereitstellbar sind.

Wichtige Merkmale der Erfindung bei Produktionsanlage mit wenigstens einer entlang einer Förderstrecke verfahrbaren Transporteinheit sind, dass eine Steuereinheit mit einer erfindungsgemäßen Konfigurationseinrichtung, insbesondere wie zuvor beschrieben und/oder nach einem der auf eine Konfigurationseinrichtung gerichteten Ansprüche, in Steuerverbindung steht. Von Vorteil ist dabei, dass die Produktionsanlage unter Rückgriff auf das bei der Simulation verwendete Streckenlayout ansteuerbar ist. Somit sind Fehler, die sich bei der Übertragung des Streckenlayouts in die Steuereinheit ergeben könnten, vermeidbar.

Wichtige Merkmale der Erfindung bei Produktionsanlage mit wenigstens einer entlang einer Förderstrecke verfahrbaren Transporteinheit sind alternativ oder zusätzlich, dass eine Steuereinheit mit einer erfindungsgemäßen Konfigurationseinrichtung durch eine Konfigurationseinrichtung, insbesondere wie zuvor beschrieben und/oder nach einem der auf eine Konfigurationseinrichtung gerichteten Ansprüche, programmierbar ist. Von Vorteil ist dabei, dass ein Steuerprogramm, welches bei der Simulation erstellt und/oder verwendet wurde, bei der Programmierung der Produktionsanlage verwendbar ist.

Bei einer vorteilhaften Augestaltung kann vorgesehen sein, dass das Streckenlayout zumindest in Parameterform an eine Fahrzeugsteuerung der Transporteinheit übergebbar ist. Hierbei kann vorgesehen sein, dass die Fahrzeugsteuerung zur Steuerung der Transporteinheit anhand eines Vergleichs einer Ist-Position der Transporteinheit mit einer durch das Streckenlayout beschriebenen Soll-Position eingerichtet ist. Fahrerlose Transportsysteme und sonstige Systeme mit spurlosen Transporteinheiten sind somit betreibbar. Die Ist-Positon ist bevorzugt in Bezug auf einen Führungsleiter und/oder auf Marker bestimmbar, beispielsweise messbar, und/oder wird bestimmt, beispielsweise gemessen.

Bei einer vorteilhaften Augestaltung kann vorgesehen sein, dass das Streckenlayout an die Steuerungseinheit übergebbar und zu einer Ansteuerung von Transporteinheiten der Produktionsanlage verwendbar ist. Von Vorteil ist dabei, dass die Steuerungseinheit Daten bekommt, mit denen eine Ansteuerung der Produktionsanlage durchführbar ist. Besonders günstig ist es, wenn das Strecklayout, insbesondere für jedes Streckenelement der Förderstrecke gesondert, Bereichsdaten enthält, welche ein Fahrverhalten in dem Streckenelement beschreiben oder vorgeben. Beispielsweise ist/sind ein zyklisches Fahrverhalten, ein kontinuierliche Fahrverhalten, ein Perlenkettenfahrverhalten, bei welchem eine Verfahrbewegung einer Transporteinheit an eine Verfahrbewegung einer weitere Transporteinheit gekoppelt ist, und/oder ein Synchronfahrverhalten oder Kombinationen dieser Fahrverhalten vorgebbar. Andere Fahrverhalten sind auch vorteilhaft vorgebbar. Alternativ oder zurätzlich kann vorgesehen sein, dass die oder eine zumindest lokal eindimensionale, computerlesbare Beschreibung des logischen Förderflusses an die Steuerungseinheit übergebbar und zu einer Ansteuerung von Transporteinheiten der Produktionsanlage verwendbar ist. Von Vorteil ist dabei, dass die Datenmenge reduziert ist. Die Steuerungseinheit benötigt insbesondere keine räumlichen Positionsdaten, wenn die Transporteinheiten ihren Fahrweg selbsttätig bestimmen und/oder wenn die Transporteinheiten spurgeführt sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Es zeigt:
- Figur 1:: eine CAD-Darstellung einer Produktionsanlage mit einer Förderstrecke,
- Figur 2:: eine Darstellung der CAD-Streckendaten der Förderstrecke aus Figur 1 in einem separaten Layer,
- Figur 3:: die CAD-Streckendaten gemäß Figur 2 mit zusätzlichen Markern nebst einer vergrößerten Darstellung einer Verzweigung,
- Figur 4:: eine virtuelle Realität mit einem Streckenlayout zu den CAD-Streckendaten gemäß Figur 2 und Figur 3,
- Figur 5:: eine stark vereinfachte Prinzipdarstellung eines Verfahrensschritts zur Verknüpfung von Streckenelementen zum Streckenlayout gemäß Figur 4,
- Figur 6:: eine stark vereinfachte Prinzipdarstellung eines Verfahrensschritts zur Erkennung von CAD-Zeichnungsfehlern in Form von teilweise überlappenden Streckenelementen,
- Figur 7:: eine stark vereinfachte Prinzipdarstellung eines Verfahrensschritts zur Behebung von CAD-Zeichnungsfehlern in Form von einer vollständigen Überlappung von Streckenelementen,
- Figur 8:: eine stark vereinfachte Prinzipdarstellung eines Verfahrensschritts zur Behebung von CAD-Zeichnungsfehlern in Form von freien Verbindungspunkten,
- Figur 9:: eine stark vereinfache Prinzipdarstellung zur Erläuterung eines weiteren Verfahrensschritts zur Behebung von CAD-Zeichnungsfehlern in Form von freien Verbindungspunkten bei Beteiligung eines gekrümmten oder nicht-geradlinigen Streckenelements,
- Figur 10:: zwei sich überlappende Streckenelemente,
- Figur 11:: die Streckenelemente gemäß Figur 10 nach Behebung eines CAD-Zeichnungsfehlers durch Parameteränderung,
- Figur 12:: zwei sich überlappende Streckenelemente, wobei ein Streckenelement einen nichtgeradlinigen oder gekrümmten Verlauf hat,
- Figur 13:: eine Variante der Behebung des CAD-Zeichnungsfehlers in Form einer Überlappung gemäß Figur 12, wobei der Verlauf des gekrümmten oder nichtgeradlinigen Streckenelements verändert ist,
- Figur 14:: eine Behebung des CAD-Zeichnungsfehlers gemäß Figur 12, wobei der Verlauf des gekrümmten oder nicht-geradlinigen Streckenelements unverändert ist,
- Figur 15:: eine Verzweigung im Streckenlayout,
- Figur 16:: eine Verzweigung mit einem CAD-Zeichnungsfehler, bei der ein Verbindungspunkt fehlt,
- Figur 17:: eine stark vereinfachte Prinzipdarstellung zur Erläuterung eines Verfahrensschritts zur Einfügung eines Weichenelements oder eines Verzweigungselements in das Streckenlayout,
- Figur 18:: eine weitere stark vereinfachte Prinzipdarstellung zur Erläuterung eines Verfahrensschritts, bei welchem ein Weichenelement oder ein Verzweigungselement in das Streckenlayout automatisiert eingefügt wird,
- Figur 19:: eine Pinzipdarstellung einer Verzweigung im Streckenlayout mit Fahrtrichtungsinformationen,
- Figur 20:: eine stark vereinfachte Prinzipdarstellung einer erfindungsgemäßen Konfigurationseinrichtung und
- Figur 21:: eine stark schematisierend vereinfachte Darstellung einer erfindungsgemäßen Produktionsanlage.

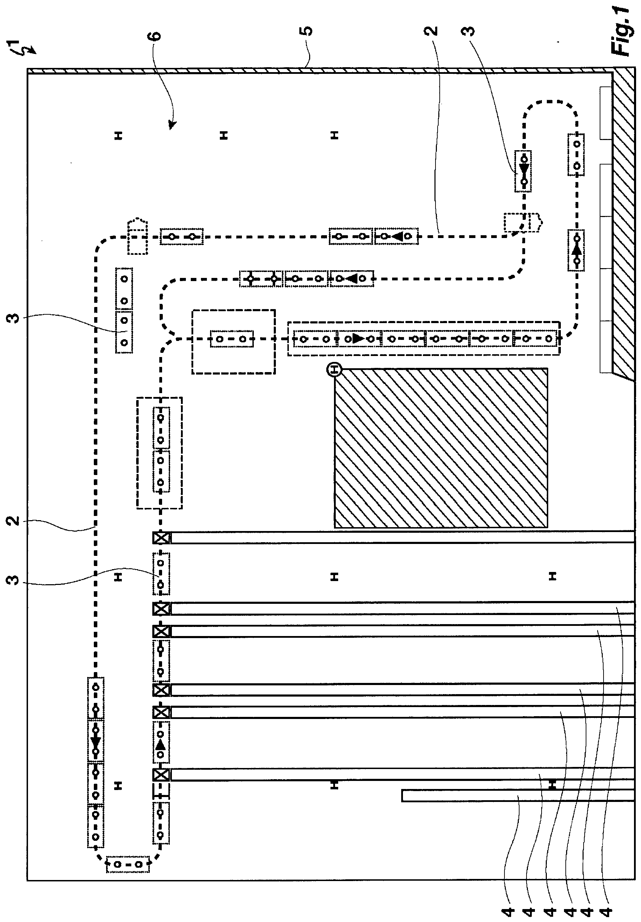

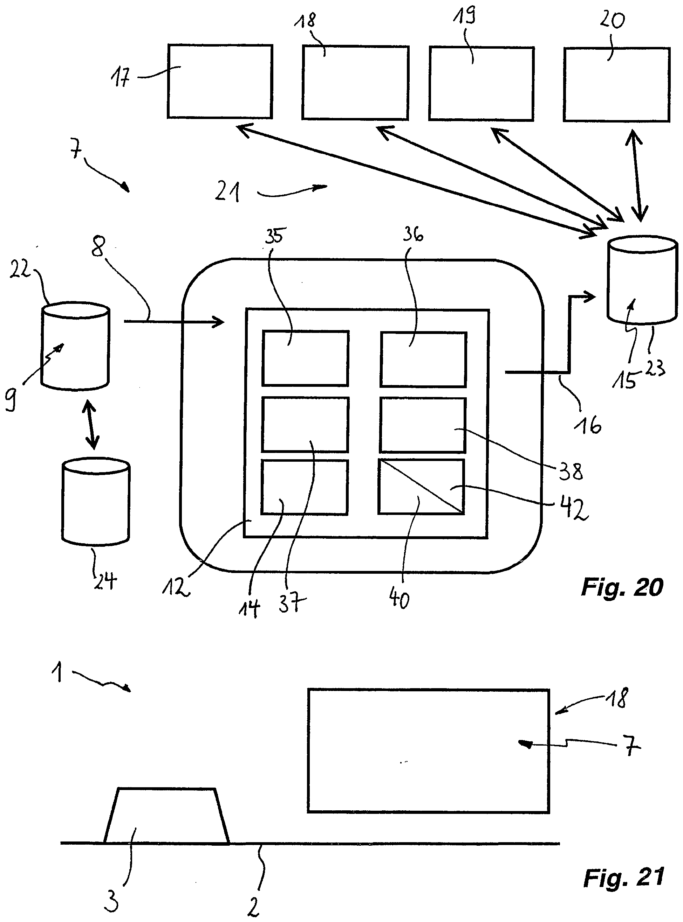

Figur 1 zeigt einen Ausschnitt aus einer CAD-Zeichnung einer im Ganzen mit 1 bezeichneten Produktionsanlage. Die Produktionsanlage 1 ist auch in Figur 21 stark vereinfacht skizziert.

Die Produktionsanlage 1 hat eine Förderstrecke 2, auf welcher Transporteinheiten 3 verfahrbar sind.

Die hier nur schematisiert dargestellten Transporteinheiten 3 können beispielsweise mechanisch, induktiv oder auf sonstige Weise entlang der Förderstrecke 2 spurgeführt sein.

Die CAD-Zeichnung gemäß Figur 1 enthält alle für den Aufbau der Förderstrecke relevanten Daten wie beispielsweise Hüllkurven, Abmaße und Erläuterungen und dergleichen mehr.

Die CAD-Zeichnung gemäß Figur 1 enthält zusätzlich zu der Förderstrecke 3 umgebende Systeme, beispielsweise zuführende und abführende Fördertechnik 4.

Die CAD-Zeichnung gemäß Figur 1 enthält schließlich auch bauliche Gegebenheiten wie Wände 5 und Räume 6.

Figur 20 zeigt in einer stark vereinfachten Prinzipdarstellung ein im Ganzen mit 7 bezeichnete Konfigurationseinrichtung.

Die Konfigurationseinrichtung 7 hat einen Dateneingang 8. Über den Dateneingang 8 sind CAD-Streckendaten 9 eingebbar, insbesondere durch computergestütztes Einlesen von Daten.

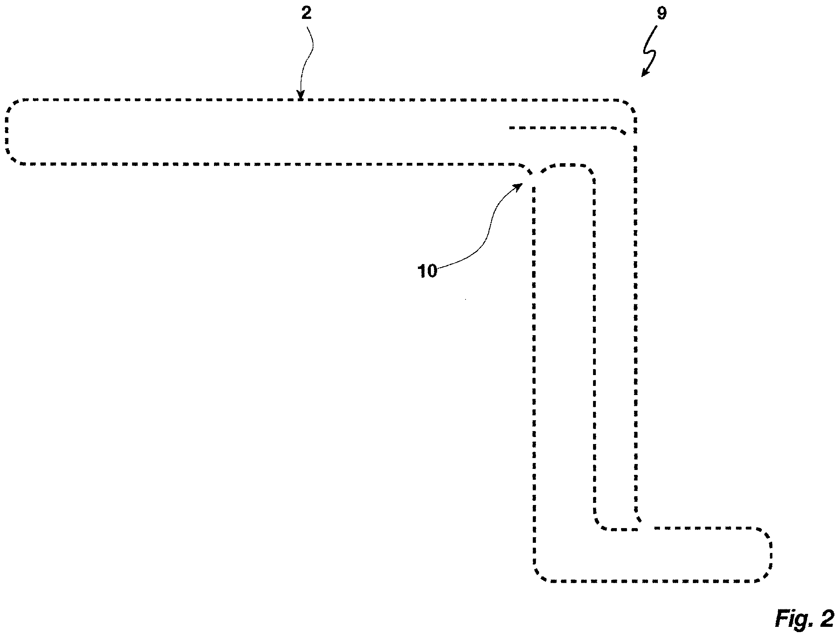

Hierzu werden die CAD-Streckendaten 9 aus der CAD-Zeichnung gemäß Figur 1 in einen separaten Layer gelegt, welcher in Figur 2 dargestellt ist. Bei diesem Layer handelt es sich um ein Gruppierungselement in der CAD-Zeichnung.

Aus Figur 2 ist ersichtlich, dass die Förderstrecke 3 verzweigt ist. Die Verzweigungselemente oder Weichenelemente sind jedoch nicht in diesem Layer abgelegt.

Dies liegt im Ausführungsbeispiel daran, dass die Verzweigungselemente oder Weichenelemente in der CAD-Zeichnung als feste Blöcke vorliegen und keinen Rückschluss auf Verbindungspunkte mit der Förderstrecke 3 zulassen.

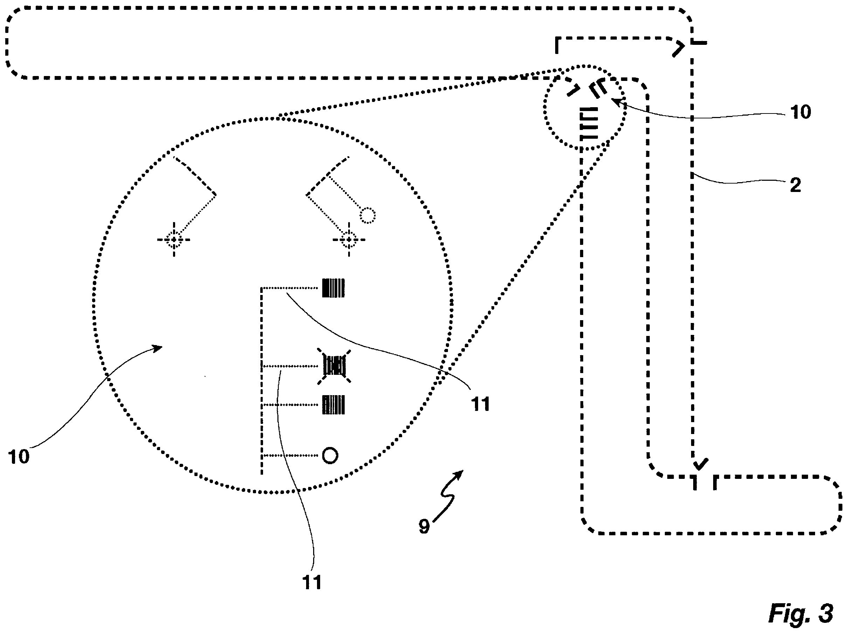

Figur 3 zeigt eine weitere Darstellung des separierten Layer mit den CAD-Streckendaten 9 zur Förderstrecke 3.

In der Vergrößerung einer Verzweigung 10 in der Förderstrecke 2 in Figur 3 ist ersichtlich, dass die Förderstrecke 2 mit Metadaten für die Anlagenfunktion angereichert ist, welche als Marker 11 definiert sind.

Die Position der Marker 11, der Marker-Typ und die gegebenenfalls dem Marker 11 angehängten benutzerdefinierten Attribute beinhalten beispielsweise relevante Informationen für die Anlagenkonfiguration wie Position von RFID-Transponder-Chips, Code des Transponders, Beginn von Barcode-Band zur Positionserfassung, Ende von Barcode-Band zur Positionserfassung und/oder Richtungssinn der Förderstrecke 2. Je nach Informationsgehalt der CAD-Streckendaten 9 können einzelne oder alle der genannten Informationen an den Verzweigungen 10, von denen in Figur 3 nur eine explizit bezeichnet ist, bzw. den Markern 11 hinterlegt sein.

Bei dem erfindungsgemäßen Verfahrens zum computergestützten Nachbilden der Produktionsanlage 1 werden die CAD-Streckendaten 9 über den Dateneingang 8 in eine Verarbeitungseinheit 12 (vergleiche Figur 20) eingelesen und in einer virtuellen Realität 13 an einem Bildschirm 14 oder dergleichen dargestellt und ausgegeben.

In noch genauer zu beschreibender Weise werden aus den CAD-Streckendaten 9 Ansteuerungsdaten 15 generiert, welche an einem Datenausgang 16 für einen Materialflussrechner 17, eine übergeordnete Steuerungseinheit 18, eine externe Simulationseinheit 19 und/oder eine Stücklisten-/Kalkulationseinheit 20 zur Parametrierung oder Programmierung der genannten Einheiten bereitgestellt werden.

Die erwähnten Einheiten 17, 18, 19, 20 und/oder weitere Einheiten sind hierzu über eine Schnittstelle 21 mit dem Datenausgang 16 verbunden.

Die CAD-Streckendaten 9 können in einem Speichermittel 22 hinterlegt und bereitgestellt sein. Der Dateneingang 8 ist hier bei dem Auslesen des Speichermittels 22 ausgebildet.

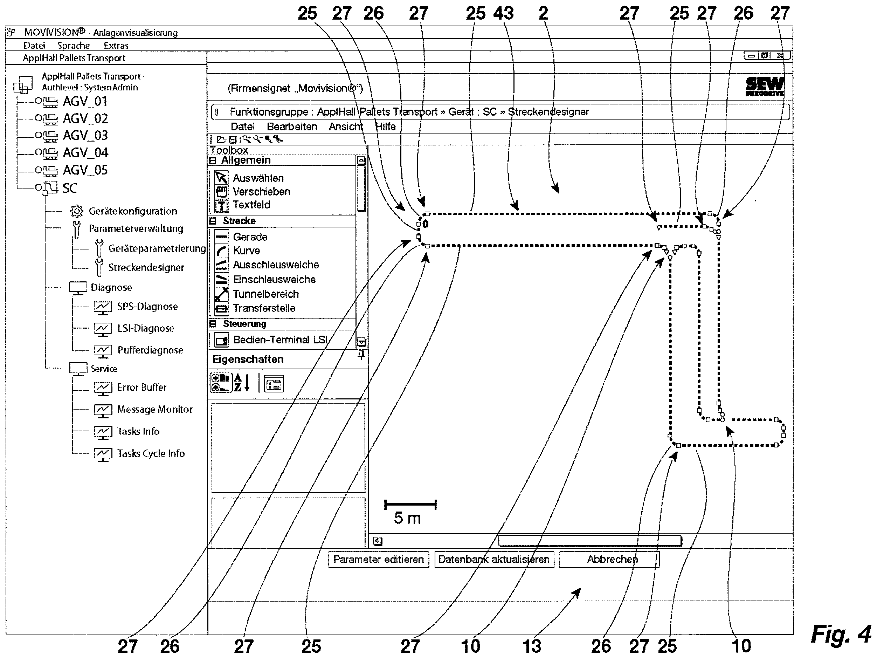

Die Ansteuerungsdaten 15 und/oder eine im Folgenden noch genauer beschriebenes, aus den CAD-Streckendaten 9 erstelltes Streckenlayout 43 (vgl. Fig. 4) können in einem Speichermittel 23 hinterlegt und zur Weiterverarbeitung bereitgestellt sein. Hierbei ist der Datenausgang 16 zur Beschreibung des Speichermittels 23 mit ausgegebenen Daten eingerichtet.

In einem weiteren Speichermittel 24 können Meta-Daten zu den CAD-Streckendaten 9, beispielsweise Meta-Daten zu den Markern 11 und/oder Meta-Daten zu den Verzweigungen 10 oder sonstige Meta-Daten, zur Verarbeitung in den erfindungsgemäßen Verfahren bereitgestellt sei.

Wie bereits erwähnt, liegen die CAD-Streckendaten 9 gemäß Figur 3 in einem separaten Layer am Dateneingang 8 vor.

Zur weiteren Verarbeitung werden die CAD-Streckendaten 9 bevorzugt in das Datenaustauschformat DXF konvertiert. Dies kann bereits vor der Bereitstellung der Daten am Dateneingang 8 oder nach Einlesen der CAD-Streckendaten 9 in die Konfigurationseinrichtung 7 erfolgen.

Der Verlauf der Förderstrecke 2 liegt somit in der Konfigurationseinrichtung 7 vor. Figur 4 zeigt eine stark vereinfachte Darstellung einer virtuellen Realität 13, in welche die Förderstrecke 2 auf diese Weise importiert wurde.

Die Förderstrecke 2 ist aus geradlinigen Streckenelementen 25 und gebogenen Streckenelementen 26 zusammengesetzt. Bei weiteren Ausführungsbeispielen sind auch Streckenelemente mit anderen Formen vorhanden, beispielhafte, mögliche Streckenelemente sind: Gerade, Kurve, Ausschleusweiche, Einschleusweiche, Tunnelbereich, Transferstelle. Es sind auch weitere Streckenelemente verwendbar.

Jedes Streckenelement 25, 26 weist an seinen Enden Verbindungspunkte 27 auf, an denen die Streckenelemente 25, 26 zur Bildung einer durchlaufenden Förderstrecke 2 zu verbinden sind. Mit dem erfindungsgemäßen Verfahren und in der erfindungsgemäßen Konfigurationseinrichtung werden diese Verbindungen zwischen den Streckenelementen 25, 26 an den Verbindungspunkten 27 automatisch hergestellt, ohne dass eine Bedienperson eingreifen muss.

Vor der automatischen Ermittlung dieser Verknüpfungen der Streckenelemente 25, 26 miteinander liegt in der Konfigurationseinrichtung 7 somit noch keine Information darüber vor, welches Streckenelement 25, 26 im Verlauf der Förderstrecke 2 vor oder hinter einem anderen Streckenelement 25, 26 angeordnet ist. Ferner liegt zu den Streckenelemente 25, 26 noch keine Fahrtrichtungsinformation vor, welche den Fahrtrichtungssinn für jedes Streckenelement 25, 26 in der Förderstrecke 2 definiert.

Jedoch liegen zu den Streckenelementen 25, 26 die bereits beschriebenen Marker 11 sowie die zugehörigen Meta-Daten aus dem Speichermittel 24 vor.

In dem erfindungsgemäßen Verfahren wird nun die Förderstrecke 2 aus den Streckenelementen 25, 26 zusammengesetzt. Nach Abschluss definieren die Verbindungspunkte 27 in für einen Computer lesbaren Weise, wie die Streckenelemente 25, 26 zusammenhängen und aufeinander abfolgen. Es ist daher ein logischer Förderfluss in der Förderstrecke 2 nachgebildet.

Da die CAD-Streckendaten 9 fehlerbehaftet sind, ist ein Regelwerk von Regeln einer Fehlerkorrektur der fehlerbehafteten CAD-Streckendaten 9 hinterlegt. Diese Regeln sind computerlesbar hinterlegt und können zur computerimplementierten Lösung die CAD-Streckenddaten 9 zur Erzeugung eines, beispielsweise des bereits erwähnten Streckenlayouts 43 computerimplementiert angewendet werden.

Hierzu wird zunächst ein erstes Streckenelement 25, 26 ausgewählt. Dies kann beispielsweise ein durch seine Lage ausgezeichnetes Streckenelement 25, 26, beispielsweise das auf einer Y-Achse oberste oder unterste Element oder das auf eine X-Achse oberste oder unterste Element sein. Dieses erste Streckenelement 25, 26 kann auch von einem Benutzer manuell ausgewählt oder auf andere Weise bestimmt werden.

Zu diesem Streckenelement 25, 26 wird nun eine Fahrtrichtungsinformation 28 eingelesen oder eingegeben, welche den korrekten Fahrtrichtungssinn für dieses Streckenelement 25, 26 vorgibt.

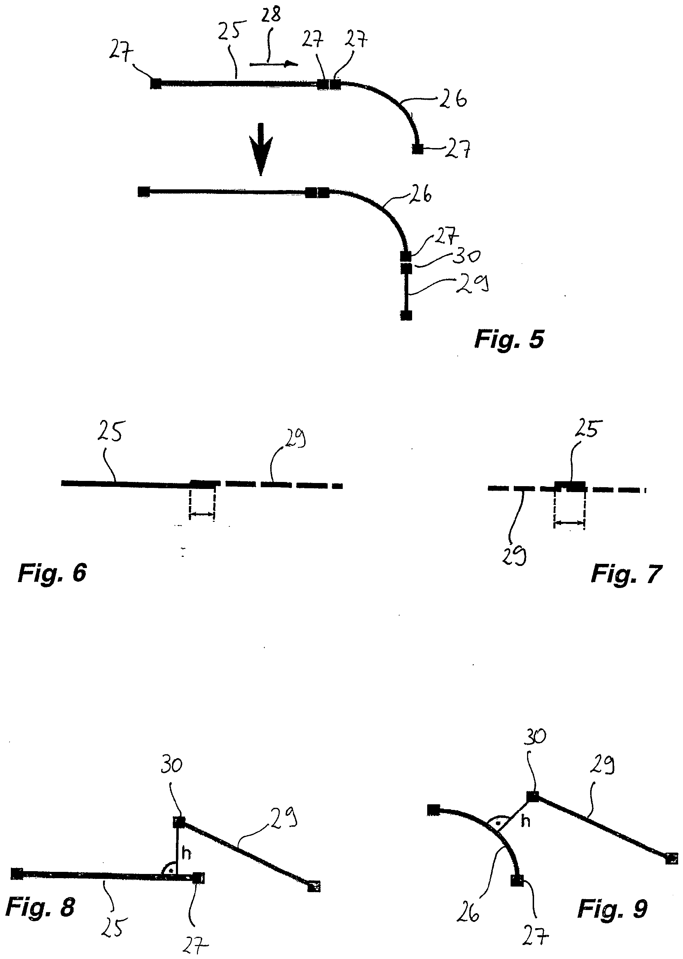

Figur 5 zeigt in der oberen Hälfte beispielhaft einen Ausschnitt aus einer Förderstrecke 2 mit einem geradlinigen Streckenelement 25.

Zur Erläuterung der Erfindung soll angenommen werden, dass dieses Streckenelement 25 das eben erwähnte erste Streckenelement ist.

Das Streckenelement 25 weist an seinen Enden jeweils einen Verbindungspunkt 27 auf.

Ferner liegt zu dem Streckenelement 25 eine Fahrtrichtungsinformation 28 vor, welche einen Fahrtrichtungssinn in Figur 5 von links nach rechts definiert.

Durch diese Fahrtrichtungsinformation 28 ist der linke Verbindungspunkt 27 des Streckenelements 25 ein Startpunkt, während der rechte Verbindungspunkt 27 des Streckenelements 25 ein Endpunkt ist.

Die Verarbeitungseinheit 12 der Konfigurationseinrichtung 7 sucht nun aus den eingelesenen CAD-Streckendaten 9 das Streckenelement, welches in der Förderstrecke 2 auf das ausgewählte Streckenelement 25 folgt.

Aus Figur 5 ist ersichtlich, dass benachbart zu dem Streckenelement 25 ein gebogenes Streckenelement 26 angeordnet ist.

Das gebogene Streckenelement 26 weist ebenfalls an seinen Enden jeweils einen Verbindungspunkt 27 auf.

Da das Streckenelement 25 noch nicht mit dem Streckenelement 26 verknüpft ist, sind die jeweils aneinander liegenden Verbindungspunkte 27 in Figur 5 separat dargestellt und bezeichnet.

Die Verarbeitungseinheit 12 prüft nun zu dem rechten Verbindungspunkt 27 des geraden Streckenelements 25, welcher durch die Fahrtrichtungsinformation 28 als Endpunkt ausgezeichnet ist, ob ein weiterer Verbindungspunkt 27 eines weiteren Streckenelements innerhalb eines ersten Abstandsschwellwertes zu dem rechten Verbindungspunkt 27 des Streckenelements 25 auffindbar ist. Hierbei ist der Abstandsschwellwert derart definiert, dass die Verbindungspunkte, die innerhalb eines Rechtecks mit vorgegebenen Seitenlängen um diesen Verbindungspunkt 27 angeordnet sind, als benachbart zu dem Verbindungspunkt akzeptiert und mit diesem verknüpft werden.

Mit anderen Worten bezieht sich der Abstandsschwellwert auf einen Abstand zwischen zwei Punkten in einem zweidimensionalen Gitter, welcher durch den größeren Wert von den beiden Werten des Betrags der Differenz der X-Koordinaten der Punkte einerseits und des Betrags der Differenz der Y-Koordinaten der Punkte andererseits definiert ist.

Bei weiteren Ausführungsbeispielen ist der Abstandsschwellwert auf andere Abstandsdefinitionen bezogen, beispielsweise auf den euklidischen Abstand, bei welchem die Quadratwurzel aus der Summe des Quadrats der Differenz der X-Koordinaten und des Quadrats der Differenz der Y-Koordinaten gegeben ist. Hierbei ergibt sich somit ein kreisförmiges Fenster.

Bei weiteren Ausführungsbeispielen wird zunächst eine Tangente an das Streckenelement 25 in dem rechten Verbindungspunkt 27 des Streckenelements 25 berechnet, um durch Extrapolation oder auf andere Weise weitere Verbindungspunkte als Kandidaten für eine Verknüpfung zu identifzieren.

Sobald auf diese Weise das Streckenelement 25 über die Verbindungspunkte 27 mit dem Streckenelement 26 verknüpft ist, wird das beschriebene Verfahren mit dem noch freien Verbindungspunkt 27 des Streckenelements 26, also dem noch unverknüpften Verbindungspunkt 27 fortgeführt.

Es ergibt sich somit die Situation gemäß der unteren Hälfte von Figur 5.

Nun wird für den rechten Verbindungspunkt 27, dem Endpunkt, des Streckenelements 26 in Figur 5 geprüft, ob ein weiterer Verbindungspunkt 30 innerhalb des vorgegebenen Abstandschwellwertes auffindbar ist.

Auf diese Weise wird das weitere Streckenelement 29 aufgefunden, zu welchem der weitere Verbindungspunkt 30 gehört.

Dieses weitere Streckenelement 29 wird anschließend über die Verbindungspunkte 27, 30 mit dem Streckenelement 26 verknüpft.

Die auf diese Weise angebundenen Streckenelemente 26, 29 und weitere Streckenelemente erben eine Fahrrichtungsinformation von dem jeweils vorausgehenden Streckenelement 25, 26, 29 in der Weise, dass der beispielsweise in der Fahrtrichtungsinformation 28 des ersten Streckenelements festgelegte Fahrtrichtungssinn fortgesetzt wird.

Mit anderen Worten erhalten die Streckenelemente 26, 29 automatisiert eine Fahrtrichtungsinformation 28, durch welche für jedes Streckenelement 25, 26, 29 ein Verbindungspunkt als Startpunkt und ein Verbindungspunkt 27 als Endpunkt ausgezeichnet wird, wobei jeweils ein Endpunkt eines Streckenelements 25, 26, 29 mit einem Startpunkt des in der Förderstrecke 2 folgenden Streckenelements 25, 26, 29 verknüpft ist.

Dieses beschriebene Verfahren wird fortgesetzt, bis zu einem Verbindungspunkt 27 innerhalb des ersten Abstandschwellwertes kein zugehöriger weiterer Verbindungspunkt 30 aufgefunden werden kann.

Auf diese Weise ist ein zusammenhängender Teil der Förderstrecke 2 als Streckenlayout 43 bereitgestellt.

Das erstellte Streckenlayout wird nun an eine nicht weiter dargestellte, an sich bekannte Fahrzeugsteuerung der Transporteinheit 3 übergeben. Die Fahrzeugsteuerung kann anschließend eine Ist-Position der Transporteinheit 3 mit einer durch das Streckenlayout 43 beschriebenen Soll-Position vergleichen. Das Ergebnis dieses Vergleichs kann an einer Anzeigeeinheit erfolgen und/oder zur Ansteuerung des Betriebsablaufs verwendbar sind. Es ist somit beispielsweise einfach realisierbar, dass ein Anzeigemittel die Ist-Position ermittelt und einem Streckenelement anhand von dessen Positionsangaben computerimplementiert zuordnet.

Somit realisiert die Erfindung gleichzeitig ein Verfahren zum computergestützten Nachbilden einer Produktionsanlage 1, wobei die Produktionsanlage 1 wenigstens eine Förderstrecke 2 aufweist, CAD-Streckendaten 9 in eine Verarbeitungseinheit 12 eingelesen werden und aus den CAD-Streckendaten 9 ein Streckenlayout 43 computerimplementiert generiert wird, welches einen logischen Förderfluss der Förderstrecke 2 computerlesbar beschreibt. Von Vorteil ist dabei, dass eine separate Einrichtung der Produktionsanlage verzichtbar ist.

Durch die Verbindungspunkte 27, 30 im Streckenlayout 43 ist eindeutig vorgegeben, wie die Streckenelemente 25, 26, 29 zusammenhängen, also welche Streckenelemente 25, 26, 29 auf welche Streckenelemente 25, 26, 29 folgen. Es ist somit durch das Streckenlayout 43 ein logischer Förderfluss definiert ist.

Bei dem bisher beschriebenen Verfahren ist der erste Abstandsschwellwert so klein gewählt, dass mit Sicherheit ausgeschlossen werden kann, dass zwei innerhalb des Abstandsschwellwertes voneinander beabstandete Verbindungspunkte 27, 30 nicht zu einer einfachen Linie der Förderstrecke 2, sondern zu einer Weiche oder Verzweigung gehören.

Sind nun noch freie Verbindungspunkte 27 vorhanden, so wird geprüft, ob diese Verbindungspunkte nur aufgrund von Zeichnungsfehlern frei, also unverknüpft, geblieben sind. Hierzu wird geprüft, ob zu diesen Verbindungspunkten weitere Verbindungspunkte innerhalb eines zweiten Abstandsschwellwertes auffindbar sind. Für Verbindungspunkte, für welche innerhalb des zweiten Abstandsschwellwertes nur genau ein weiterer Verbindungspunkt auffindbar ist, wird ein Zeichnungsfehler erkannt, und diese Verbindungspunkte werden verknüpft. Der zweite Abstandsschwellwert ist vorzugsweise kleiner als eine Lücke in einem Weichen- oder Verzweigungselement gewählt.

Im folgenden Schritt wird nun nach den Verzweigungen gesucht.

Hierzu wird für alle Verbindungspunkte 27, zu denen kein benachbarter Verbindungspunkt 27, 30 innerhalb des ersten oder zweiten Abstandsschwellwertes liegt, geprüft, ob innerhalb eines dritten Abstandsschwellwertes, der größer als der erste Abstandsschwellwert ist, ein Verbindungspunkt 27, 30 auffindbar ist.

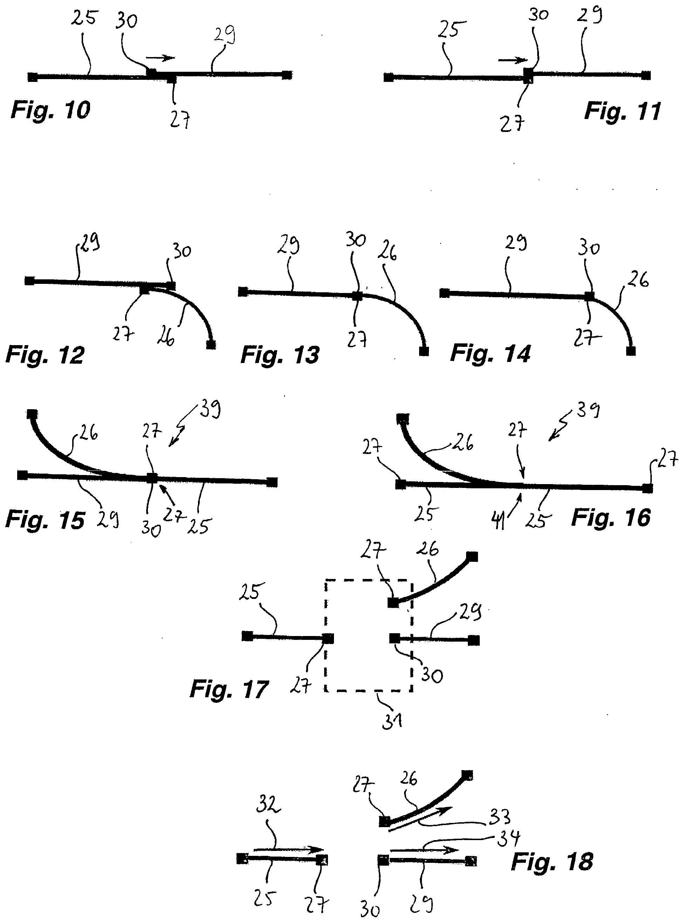

Diese Situation ist in Figur 17 dargestellt.

Dort ist ersichtlich, dass der dritte Abstandsschwellwert ein Fenster 31 definiert. Es ist ersichtlich, dass der Verbindungspunkt 27 des Streckenelements 26 und der Verbindungspunkt 30 des Streckenelements 29 innerhalb des dritten Abstandschwellwertes zu dem Verbindungspunkt 27 des Streckenelements 25 befinden.

Es ist ferner ersichtlich, dass sich in dem Fenster 31 kein weiterer Verbindungspunkt befindet, welcher derart eng benachbart zu dem Verbindungspunkt 27 des Streckenelements 25 angeordnet ist, dass er sich innerhalb des ersten oder zweiten Abstandschwellwertes zu dem Verbindungspunkt 27 des Streckenelements 25 befinden würde.

Dies ist für die Verarbeitungseinheit 12 das Kriterium, dass innerhalb des Fensters 31 eine Weiche im Streckenlayout 43 eingefügt werden muss.

Die Verarbeitungseinheit 12 fügt nun ein nicht weiter dargestelltes Weichenelement derart ein, dass der Verbindungspunkt 27 des Streckenelements 25 mit dem Verbindungspunkt 27 des Streckenelements 26 und mit dem Verbindungspunkt 30 des Streckenelements 29 verbunden bzw. verknüpft ist.

Um die Art des Weichenelements zu bestimmen, beispielsweise ob es sich um eine Verzweigung 10 handelt, die von dem Streckenelement 25 auf das Streckenelement 26 einerseits und auf das Streckenelement 29 andererseits oder die von dem Streckenelement 26 auf das Streckenelement 25 einerseits und auf das Streckenelement 29 andererseits oder die von dem Streckenelement 29 auf das Streckenelement 26 einerseits und das Streckenelement 25 andererseits führt, wird das in Figur 18 schematisch dargestellte Verfahren verwendet.

Es wird zunächst für jeden der Verbindungspunkte 27 und für den Verbindungspunkt 30 jeweils die Tangente 32, 33, 34 an das zugehörige Streckenelement 25, 26 bzw. 29 berechnet.

Anhand der Winkel, welche die Tangenten - gegebenenfalls bis zu einem Schnittpunkt verlängert - miteinander einschließen, kann der Weichentyp eindeutig bestimmt werden.

Das zugehörige Weichenelement bzw. Verzweigungselement bzw. Kreuzungselement bei mehr als drei beteiligten Verbindungspunkten, wird von der Verarbeitungseinheit 12 im Anschluss ausgewählt.

Zur Berechnung der Tangenten 32, 33, 34 ist in der Verarbeitungseinheit 12 ein Tangentenberechnungsmittel 35 ausgebildet.

Zur Berechnung des bereits erwähnten Abstands ist in der Verarbeitungseinheit 12 ein Abstandbestimmungsmittel 36 zur Bestimmung eines Abstands zwischen einem Verbindungspunkt 27, 30 eines Streckenelements und einem weiteren Verbindungspunkt 27, 30 eines weiteren Streckenelements 25, 26, 29 ausgebildet, beispielsweise durch geeignete Programmierung.

Um zu ermitteln, ob ein Verbindungspunkt 27, 30 innerhalb eines Abstandschwellwertes oder außerhalb eines Abstandschwellwertes zu einem anderen Verbindungspunkt 27, 30 angeordnet ist, ist in der Verarbeitungseinheit 12 ein Vergleichsmittel 37 ausgebildet, beispielsweise durch geeignete Programmierung.

Dieser Verfahrensschritt wird nun für alle freien Verbindungspunkte 27, 30 in der Förderstrecke 2 durchgeführt.

Auf diese Weise wird ein zusammenhängender, verzweigter Teil der Förderstrecke 2 in dem Streckenlayout 43 abgebildet.

Das so berechnete Streckenlayout 43 kann nun immer noch freie Verbindungspunkte 27 aufweisen.

Dies liegt daran, dass die ursprünglichen CAD-Streckendaten 9 Zeichnungsfehler aufweisen können, welche sich durch eine ungenaue Platzierung der Verbindungspunkte 27, 30 ergeben.

Beispielsweise kann sich die Situation gemäß Figur 8 oder die Situation gemäß Figur 9 ergeben.

In diesen Figuren 8, 9 ist ersichtlich, dass das weitere Streckenelement 29 mit dem geraden Streckenelement 25 bzw. mit dem gebogenen Streckenelement 26 verknüpft werden müsste, dass jedoch ein fehlerhafter seitlicher Versatz der Streckenelemente 25, 26, 29 untereinander dazu führt, dass die benachbarten Verbindungspunkte 27, 30 nicht als zueinander benachbart erkannt werden.

In dieser Situation bestimmt das Abstandbestimmungsmittel 36 den Abstand h des weiteren Verbindungspunktes 30 von dem geradlinigen Streckenelement 25 in Figur 8 bzw. von den gebogenen Streckenelementen 26 in Figur 9 und von allen weiteren Streckenelementen (nicht gezeigt) der CAD-Streckendaten 9. Es sei angenommen, dass das Streckenelement 25 in Figur 8 bzw. das Streckenelement 26 in Figur 9 jeweils das am nächsten gelegene Streckenelement bilden.

Dieser Abstand h wird im Beispiel als Länge des Lots auf das jeweilige Streckenelement 25 bzw. 26 bestimmt, also berechnet.

Nun wird mit dem Vergleichsmittel 37 geprüft, ob dieser Abstand kleiner als ein vierter Abstandschwellwert ist. Der vierte Abstandschwellwert ist im Beispiel größer als der erste Abstandschwellwert festgelegt.

Ist dies der Fall, so befindet sich der weitere Verbindungspunkt 30 innerhalb des vierten Abstandschwellwertes zu dem geraden Streckenelement 25 in Figur 8 bzw. den gebogenem Streckenelement 26 in Figur 9.

Nun wird umgekehrt der Abstand des Verbindungspunkt 27 des geradlinigen Streckenelement 25 in Figur 8 bzw. des gebogenen Streckenelements 26 in Figur 9 zu dem weiteren Streckenelement 29 bestimmt, also berechnet. Hierzu wird ebenfalls die Länge des Lots auf das Streckenelement 29 berechnet.

Mit dem Vergleichsmittel 37 wird nun geprüft, ob auch dieser Abstand innerhalb des vierten Abstandschwellwerts liegt.

Ist dies der Fall, so befindet sich der Verbindungspunkt 27 in Figur 8 bzw. Figur 9 innerhalb des vierten Abstandsschwellwertes zu dem weiteren Streckenelement 29.

Sind die beiden Kriterien erfüllt, ist also der weitere Verbindungspunkt 30 innerhalb des vierten Abstandschwellwertes zu dem Streckenelement 25 bzw. 26 und der Verbindungspunkt 27 innerhalb des vierten Abstandschwellwertes zu dem weiteren Streckenelement 29, so wird der Verbindungspunkt 27 mit dem weiteren Verbindungspunkt 30 verknüpft. Für viele Zwecke ist es ausreichend, wenn der vierte Abstandsschwellwert gleich dem zweiten Abstandsschwellwert gewählt ist.

Dieser Verfahrensschritt wird nun für alle noch freien Verbindungspunkte 27, 30 im Streckenlayout 43 durchgeführt.

Somit reduziert sich die Anzahl der freien Verbindungspunkte 27, 30 in den CAD-Streckendaten 9.

Für die so verknüpften Verbindungspunkte 27, 30 werden die Koordinaten der Verbindungspunkte 27, 30 in einer Fehlerkorrektur so verändert, dass die miteinander verknüpften Verbindungspunkte 27, 30 übereinstimmende Koordinaten haben.

Hierzu weist die Verarbeitungseinheit 12 ein Variationsmittel 38 auf, mit welchem ein Parameter der Streckenelemente 25, 26, 29, beispielsweise eine Länge, eine Krümmung, eine Ausdehnung entlang der X-Koordinate und/oder eine Ausdehnung entlang der Y-Koordinate oder ein weiterer Parameter, veränderbar ist/sind.

Diese Veränderung ist in den Figuren 10 und 11 symbolisch dargestellt.

In Figur 10 ist der Fall dargestellt, dass die Streckenelemente 25, 29 zueinander fluchtend ausgerichtet sind, dass jedoch die eigentlich miteinander zu verknüpfenden bzw. verknüpften Verbindungspunkte 27 und 30 nicht an demselben Ort angeordnet sind.

Ein Pfeil deutet das Wirken des Variationsmittels 38 an. Durch das Variationsmittel 38 wird die Länge des weiteren Streckenelements 29 als Parameter verkürzt, bis der weitere Verbindungspunkt 30 dieselben Koordinaten hat, wie der Verbindungspunkt 27.

Mit dem beschriebenen Verfahren lassen sich somit teilweise Überlappungen von Streckenelementen gemäß Figur 6 oder auch vollständige Überlappungen gemäß Figur 7 erkennen und können automatisiert verarbeitet werden.

Figur 12 bis 14 zeigt schematisch die Funktion des Variationsmittels 38 in einer Situation analog zur Figur 9.

In Figur 12 sind nach der zu Figur 9 erläuterten Berechnungsroutine die Verbindungspunkte 27 und 30 miteinander verknüpft.

Um die Verbindungspunkte 27, 30 zur Deckung zu bringen, kann mit dem Variationsmittel 38 einerseits die Länge des weiteren Streckenelements 29 verkürzt werden, bis der Verbindungspunkt 27 an demselben Ort wie der weitere Verbindungspunkt 30 liegt. Es ergibt sich so die Situation gemäß Figur 13.

Alternativ oder zusätzlich kann der Krümmungsradius des gebogenen Streckenelements 26 oder die gebogene Verlaufsform des gebogenen Streckenelements 26 mit dem Variationsmittel 38 verändert werden, bis der Verbindungspunkt in Deckung zu dem weiteren Verbindungspunkt 30 gebracht ist.

Während die Verfahrensweise gemäß Figur 13 den Vorteil hat, dass der Krümmungsradius des gebogenen Streckenelements 26 nicht verändert wird, hat das Verfahren gemäß Figur 14 den Vorteil, dass die Länge des geradlinigen Streckenelements 29 unverändert (und somit möglichst groß) bleibt.

Der bereits erwähnte Spezialfall gemäß Figur 7 ist die vollständige Überlappung zweier Streckenelemente 25, 29. Diese führt dazu, dass die Verbindungspunkte 27 des kürzeren Streckenelements 25 beide auf dem längeren Streckenelement 29 liegen. In diesem Fall entfernt die Verarbeitungseinheit 12 das kürzere Streckenelement 25 vollständig.

In den CAD-Streckendaten 9, besonders wenn sie Bodentransportsysteme, also Systeme ohne mechanische Spurführung, betreffen, können Verzweigungsstellen 39 eingezeichnet sein. Figur 15 zeigt eine derartige Verzweigungsstelle 39.

Diese Verzweigungsstelle 39 werden von der Verarbeitungseinheit 12 dadurch erkannt, dass drei Verbindungspunkte, nämlich ein Verbindungspunkt 27 des Streckenelements 25, ein Verbindungspunkt 27 des Streckenelements 26 und ein Verbindungspunkt 30 des Streckenelements 29, zueinander innerhalb des ersten Abstandschwellwertes angeordnet sind.

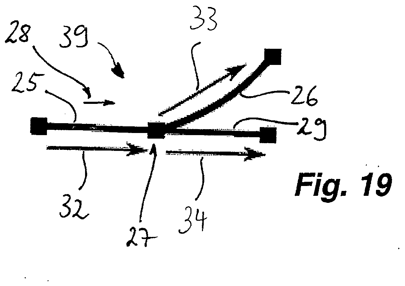

Eine solche Verzweigung 39 kann jedoch in der Situation gemäß Figur 16 nicht korrekt von der Verarbeitungseinheit 12 erkannt werden, da die Streckenelemente 25, 29 in Figur 19 nicht durch einen Verbindungspunkt 27 voneinander getrennt sind, sondern stattdessen ein einziges geradliniges, durchgehendes Streckenelement 25 vorhanden ist.

An der Stelle, an welcher das gebogene Streckenelement 26 abzweigt, ist somit kein zugehöriger Verbindungspunkt 27 des Streckenelements 25 auffindbar. Mit anderen Worten kann eine Verzweigung nicht fehlerfrei erkannt werden, wenn ein Verbindungspunkt in den CAD-Streckendaten 9 fehlt.

Die Behebung dieses Problems ist ähnlich wie bei der zuvor beschriebenen Überlappung zweier Streckenelemente 25, 26, 29 gemäß Figur 9.

Der Verbindungspunkt 27 des Streckenelements 26 hat keinen geeigneten Verbindungspunkt.

Das Abstandsbestimmungsmittel 36 berechnet wieder den Abstand dieses Verbindungspunktes 27 des Streckenelements 26 zu dem Streckenelement 25 durch orthogonale Projektion des Punktes auf alle Streckenelemente 25, 26, 29 der CAD-Streckendaten 9.

Unterschreitet der so berechnete Abstand einen fünften Abstandschwellwert, der beispielsweise gleich dem ersten Abstandschwellwert oder zweiten Abstandschwellwert oder einen Abstandschwellwert unterhalb des ersten Abstandschwellwerts gewählt sein kann, so nimmt die Verarbeitungseinheit 12 an, dass der Verbindungspunkt 27 auf dem Streckenelement 25 liegt. Gleichzeitig wird geprüft, ob der betrachtete Verbindungspunkt 27 weiter weg von den Verbindungspunkten 27 des Streckenelements 25 als ein sechster Abstandsschwellwert liegt. Ist dies der Fall, so kann ausgeschlossen werden, dass in Wirklichkeit eine Situation gemäß Figur 9 oder Figur 12 vorliegt.

Um auszuschließen, dass es sich um eine Kreuzung handelt, können, wie zur Figur 18 beschrieben, Tangenten 32, 33, 34 an die Verbindungspunkte 27 der Streckenelemente 25, 26 berechnet werden. Sind diese gleich oder liegen innerhalb eines vorgegebenen Winkelbereichs, liegt eine Verzweigung vor. Eine Kreuzung hat dagegen stark voneinander abweichende Tangenten.

In der Verarbeitungseinheit 12 ist ein Unterteilungsmittel ausgebildet, mit welchem in einem Streckenelement 25, 26, 29 zwischen den zugehörigen Verbindungspunkten 27, 30 ein weiterer Verbindungspunkt 27 ausbildbar ist, wodurch das verarbeitete Streckenelement 25, 26, 29 in zwei Streckenelemente unterteilt und aufgetrennt wird.

In der Situation gemäß Figur 16 wird dieser zusätzliche Verbindungspunkt als Teilungspunkt 41 derart eingefügt, dass seine Position mit dem Verbindungspunkt 27 des Streckenelements 26 zusammenfällt.

Auf diese Weise ist die Situation gemäß Figur 15 rekonstruiert.

Figur 19 erläutert, wie die Fahrrichtungsinformation 28 an einer Verzweigungsstelle 39 von einem Streckenelement 25 auf die folgenden Streckenelemente 26 und 29 übertragen wird.

Hierzu werden an dem gemeinsamen Verbindungspunkt 27 die Tangenten 32, 33, 34 an die Streckenelemente 25, 26, 29 in analoger Weise zur Figur 18 berechnet.

Anschließend wird geprüft, ob die Fahrtrichtungsinformation 28 zu dem Streckenelement 25, also dem in Verlaufsrichtung der Förderstrecke 2 zuerst angeordneten Streckenelements, einen Fahrrichtungssinn definiert, der parallel (gleichsinnig) oder antiparallel (gegensinnig) zu der Tangente 32 des Streckenelements 25 ausgerichtet ist.

Ist der Fahrtrichtungssinn der Fahrtrichtungsinformation 28 gleichsinnig zu der Tangente 32 ausgerichtet, so werden die Fahrtrichtungsinformationen der Streckenelemente 26 und 29 so gewählt, dass die zugehörigen Fahrtrichtungssinne parallel, also gleichsinnig, zu den jeweiligen Tangenten 33 bzw. 34 ausgerichtet sind.

Im anderen Fall wird die Fahrtrichtungsinformation der Streckenelemente 26, 29 so festgelegt, dass ein Fahrtrichtungssinn geben ist, der antiparallel, also gegensinnig, zu der Tangente 33 bzw. 34 verläuft.

Wie bereits erwähnt, kann die Situation gemäß Figur 16 in der Verarbeitungseinheit 12 dadurch charakterisiert sein, dass der Verbindungspunkt 27 des Streckenelements 26 innerhalb eines fünften Abstandschwellwertes zu dem Streckenelement 25 liegt und zugleich der Verbindungspunkt 27 des Streckenelements 26 außerhalb eines sechsten Abstandschwellwertes zu den Verbindungspunkten 27 des Streckenelements 25 liegt.

Der fünfte Abstandschwellwert kann hierbei gleich dem ersten Abstandschwellwert oder kleiner als der erste Abstandschwellwert oder anderweitig gewählt sein.

Der sechste Abstandschwellwert kann hierbei gleich einem Bruchteil an einer typischen Länge eines Streckenelements, beispielsweise gleich der Hälfte oder zwei Drittel dieser Länge gewählt sein.

In der bereits beschriebenen Unterteilung des Streckenelements 25 in zwei Streckenelemente wird in dem Streckenelement 25 ein Teilungspunkt 41 eingefügt, welcher den Übergang eines durch die Unterteilung gebildeten Streckenelement-Teils von dem anderen, verbleibenden Streckenelement-Teil markiert. Aus diesem Teilungspunkt 41 werden automatisiert zwei Verbindungspunkte gebildet, die jeweils einem der neu aus dem Streckenelement 25 entstandenen Streckenelemente zugeordnet sind.

Nach Abarbeitung der beschriebenen Verarbeitungsschritte sind somit die CAD-Streckendaten 9 durch die Verarbeitungseinheit 12 automatisch in ein Streckenlayout 43 der Förderstrecke 2 umgewandelt, wobei in dem Streckenlayout 43 die Streckenelemente 25, 26, 29 der Förderstrecke 2 an Verbindungspunkten 27, 30 verknüpft und mit Fahrtrichtungsinformationen 28 derart versehen sind, dass die Förderstrecke 2 in der virtuellen Realität 13 nachgebildet ist.

Dieses Streckenlayout 43 wird nun über den Datenausgang 16 in das Speichermittel 23 ausgegeben und dort zur Weiterverarbeitung in Form von Ansteuerungsdaten 15 bereitgestellt.

Über die Schnittstelle 21 kann das Streckenlayout 43 einem Materialschlussrechner 17 in Form von auf den Materialflussrechner 17 zugeschnittenen oder an den Materialflussrechner 17 angepassten Ansteuerungsdaten 15 zugeführt werden, in welchem der Materialfluss in der Förderstrecke 2 berechenbar oder simulierbar ist. Hierbei wird das Streckenlayout 43 oder zumindest ein relevanter Teil davon in an sich bekannter Weise in ein Datenformat umgewandelt, welches auf den Materialflussrechner 17 abgestimmt ist. Die Ansteuerungsdaten 15 stellen dann den für den Materialflussrechner 17 benötigten Informationsanteil des Streckenlayouts 43 in diesem Datenformat dar.

Alternativ oder zusätzlich kann das Streckenlayout 43 über die Schnittstelle 21 einer Steuerungseinheit 18 in Form von auf die Steuerungseinheit 18 zugeschnittenen oder an die Steuerungseinheit 18 angepassten Ansteuerungsdaten 15 zugeführt werden, mit welcher die Produktionsanlage 1 gemäß der Daten aus dem Streckenlayout 43 angesteuert werden kann. Hierbei wird das Streckenlayout 43 in an sich bekannter Weise in Ansteuerungsdaten 15 für die Steuerungseinheit 18 konvertiert.

Das Streckenlayout 43 kann alternativ oder zusätzlich über die Schnittstelle 21 an eine Simulationseinheit 19 in Form von auf die Simulationseinheit 19 zugeschnittenen oder an die Simulationseinheit 19 angepassten Ansteuerungsdaten 15 übertragen werden, in welcher Ablaufprozesse der Produktionsanlage 1 mit den Daten des Streckenlayouts 43 simulierbar sind. Hierbei wird das Streckenlayout 43 in an sich bekannter Weise in Ansteuerungsdaten 15 für die Simulationseinheit 19 konvertiert.

Das Streckenlayout 43 kann alternativ oder zusätzlich über die Schnittstelle 21 an eine Stücklisten-/Kalkulationseinheit übermittelt werden, in welcher beispielsweise Stücklisten für die aufzubauende Förderstrecke 2 und/oder Kalkulationen zu der Förderstrecke 2 mit den Daten des Streckenlayouts 43, die in Form von aus dem Streckenlayout 43 in an sich bekannter Weise erzeugten Ansteuerungsdaten 15 vorliegen, automatisch berechnet werden.

Die Ansteuerungsdaten 15 können allgemein als Parameter übermittelt werden.

Die Erfindung ermöglicht somit auch ein erfindungsgemäßes Verfahren, bei welchem das Streckenlayout 43 zumindest in Parameterform oder vollständig an eine Fahrzeugsteuerung einer in der Förderstrecke 2 fahrenden Transporteinheit 3 übergeben wird. Hierzu kann der Benutzer beispielsweise den Menüpunkt "Geräteparametrierung" für den entsprechenden Teil der Produktionsanlage 1 (zum Beispiel die Transporteinheiten "AGV_01" bis "AGV_05" oder für den Teil "SC") anwählen.

Hierbei kann die Fahrzeugsteuerung zur Steuerung der Transporteinheit 3 anhand eines Vergleichs einer Ist-Position der Transporteinheit 3 mit einer durch das Streckenlayout 43 beschriebenen Soll-Position eingerichtet sein. Die Fahrzeugsteuerung kann zu einer entsprechenden Auswertung des Streckenlayouts 43, beispielsweise zur Extraktion von Soll-Positionen aus dem Streckenlayout 43, eingerichtet sein.

Zur Weiterverbeitung in der Steuerungsdaten kann vorgesehen sein, dass das Streckenlayout 43 und/oder die oder eine zumindest lokal eindimensionale, computerlesbare Beschreibung des logischen Förderflusses an eine Steuerungseinheit 18 übergeben und zu einer Ansteuerung von Transporteinheiten 3 der Produktionsanlage 1 verwendet oder bereitgestellt wird. Von Vorteil ist dabei, dass manuelle Schritte bei der Inbetriebnahme vermeidbar und/oder vemindertbar sind.

Es sei noch erwähnt, dass nach Fertigstellung des Streckenlayouts 43 in der Verarbeitungseinheit 12 eine Fehlerprüfung durchgeführt wird, in welcher für jedes Streckenelement 25, 26, 29 geprüft wird, ob die zugeordneten Fahrtrichtungsinformationen 28 miteinander und mit der Verknüpfung kompatibel sind. Beispielsweise kann hier geprüft werden, ob die tatsächlich eine Ausschleusweiche oder vielmehr eine Einschleusweiche an einer bestimmten Stelle vorgesehen sein sollte, da sich beide Streckenelemente durch die Fahrrichtungsinformation unterscheiden.

Es stehen unterschiedliche Diagnose-Mittel zur Verfügung. Im Menüpunkt "Diagnose" in dem Menü. in dem linken Fenster "A" in Fig. 4, hat ein Benutzer die Wahl zwischen einer Diagnose über die Steuerungseinheit 18 ("SPS-Diagnose") oder über ein tragbares grafisches Bediengerät ("LSI-Diagnose"). An dem tragbaren grafischen Bediengerät ist das Streckenlayout 43 mit den aktuellen Positionen der Transporteinheiten 3 anzeigbar, so dass ein Benutzer sofort erkennen kann, auf welches Teil der Produktionsanlage 1 sich eine aktuelle Information oder Meldung bezieht.

Bei einer Anwendung der Erfindung bei einem Verfahren zur Inbetriebnahme einer Produktionsanlage 1 mit wenigstens einer entlang einer Förderstrecke verfahrbaren Transporteinheit 3 und eine Steuerungseinheit 18, kann vorgesehen sein, dass mit einem erfindungsgemäßen Verfahren ein Streckenlayout 43 erzeugt und Daten des Streckenlayouts 43 an die wenigstens eine Transporteinheit 3 und/oder die Steuerungseinheit 18 übergeben werden. Manuelle, zeitaufwändige Zwischenschritte sind verzichtbar.

Bei den beschriebenen Ausführungsbeispielen kann vorgesehen sein, dass das Streckenlayout 43 an eine Fahrzeugsteuerung der Transporteinheit 3 übergeben wird. Hierbei können die Daten des Streckenlayouts 43 einfach in Parameterform übertragen werden. Hierbei kann vorgesehen sein, dass die Fahrzeugsteuerung zur Steuerung der Transporteinheit 3 anhand eines Vergleichs einer Ist-Position der Transporteinheit 3 mit einer durch das Streckenlayout 43 beschriebenen Soll-Position eingerichtet ist. In diesem Fall ist keine Spurführung erforderlich, sondern die Spurführung ergibt sich aus den Daten des Streckenlayouts 43.

Zur Inbetriebnahme der Steuerungseinheit 18 wird das Streckenlayout 43 in eine lokal eindimensionale, computerlesbare Beschreibung des logischen Förderflusses umgewandelt. Diese Beschreibung wird anschließend an die Steuerungseinheit 18 übergeben. Die computerlesbare Beschreibung stellt einen Satz von Ansteuerungsdaten 15 dar.

Anhand dieser Ansteuerungsdaten werden die Transporteinheiten 3 der Produktionsanlage 1 angesteuert.

Bei dem Verfahren zum computergestützten Nachbilden einer Produktionsanlage 1 wird vorgeschlagen, mit einer Konfigurationseinrichtung 7 CAD-Streckendaten 9 einer Förderstrecke 2 einzulesen und in ein aus Streckenelementen 25, 26, 29, die an Verbindungspunkten 27, 30 verknüpft sind, zusammengesetztes Streckenlayout 43 automatisiert umzuwandeln und zur Weiterverarbeitung bereitzustellen.

### Bezugszeichenliste

- 1: Produktionsanlage
- 2: Förderstrecke
- 3: Tansporteinheit
- 4: Fördertechnik
- 5: Wand
- 6: Raum
- 7: Konfigurationseinrichtung
- 8: Dateneingang
- 9: CAD-Streckendaten
- 10: Verzweigung
- 11: Marker
- 12: Verarbeitungseinheit
- 13: virtuelle Realität
- 14: Bildschirm
- 15: Ansteuerungsdaten
- 16: Datenausgang
- 17: Materialflussrechner
- 18: Steuerungseinheit
- 19: Simulationseinheit
- 20: Stücklisten-/ Kalkulationseinheit
- 21: Schnittstelle
- 22, 23, 24: Speichermittel
- 25, 26: Streckenelement
- 27: Verbindungspunkt
- 28: Fahrtrichtungsinformation
- 29: Streckenelement
- 30: Verbindungspunkt
- 31: Fenster
- 32, 33, 34: Tangente
- 35: Tangentenberechnungsmittel
- 36: Abstandbestimmungsmittel
- 37: Vergleichsmittel
- 38: Variationsmittel
- 39: Verzweigungsstelle
- 40: Unterteilungsmittel
- 41: Teilungspunkt
- 42: Zuweisungsmittel
- 43: Streckenlayout

## Patentansprüche

1. Verfahren zum computergestützten Nachbilden einer Produktionsanlage (1),
wobei die Produktionsanlage (1) wenigstens eine Förderstrecke (2) aufweist, wobei CAD-Streckendaten (9) in eine Verarbeitungseinheit (12) eingelesen werden,
die CAD-Streckendaten (9) fehlerbehaftet sind,
ein Regelwerk Regeln einer Fehlerkorrektur der fehlerbehafteten CAD-Streckendaten (9) aufweist
und aus den CAD-Streckendaten (9) ein Streckenlayout (43) computerimplementiert generiert wird,
welches einen logischen Förderfluss der Förderstrecke (2) computerlesbar beschreibt,
wobei die Regeln auf die CAD-Streckendaten (9) zur Erzeugung des Streckenlayouts (43) computerimplementiert angewendet werden.

2. Verfahren nach Anspruch 1,
**dadurch gekennzeichnet,**
**dass** zur Generierung des Streckenlayouts (43) im logischen Förderfluss aufeinanderfolgende Streckenelemente (25, 26, 29) der CAD-Streckendaten (9) logisch verknüpft werden.

3. Verfahren nach einem der vorangehenden Ansprüche,
**dadurch gekennzeichnet,**
**dass** aus dem Streckenlayout (43) eine zumindest lokal eindimensionale, computerlesbare Beschreibung des logischen Förderflusses abgeleitet wird.

4. Verfahren nach Anspruch 3,
**dadurch gekennzeichnet,**
**dass** das Streckenlayout (43) und/oder die zumindest lokal eindimensionale, computerlesbare Beschreibung des logischen Förderflusses an eine Steuerungseinheit (18) übergeben und zu einer Ansteuerung von Transporteinheiten (3) der Produktionsanlage (1) verwendet oder bereitgestellt wird.

5. Verfahren nach einem der vorangehenden Ansprüche,
**dadurch gekennzeichnet,**
**dass** CAD-Streckendaten (9) in eine Verarbeitungseinheit (12) eingelesen werden, dass die CAD-Streckendaten (9) in einer virtuellen Realität (13) automatisiert dargestellt werden und dass Ansteuerungsdaten (15) an einer für wenigstens ein Element aus der Gruppe von Materialflussrechner (17), übergeordnete Steuerungseinheit (18), externe Simulationseinheit (19) und Stücklisten-/Kalkulationseinheit (20) ausgebildeten Schnittstelle (21) automatisiert bereitgestellt werden.

6. Verfahren nach einem der vorangehenden Ansprüche,
**dadurch gekennzeichnet,**
**dass** CAD-Streckendaten (9) in eine Verarbeitungseinheit (12) eingelesen werden, wobei die CAD-Streckendaten (9) zumindest Streckenelemente (25, 26, 29) umfassen, aus denen die Förderstrecke gebildet ist, und dass die Streckenelemente (25, 26, 29) mit einem Regelwerk automatisiert zu einem Streckenlayout (43) verknüpft und zu einer computergestützten Nachbildung der Förderstrecke (2) bereitgestellt werden.

7. Verfahren nach einem der vorangehenden Ansprüche,
**dadurch gekennzeichnet,**
**dass** ein erster Verbindungspunkt (27, 30) eines ersten Streckenelements (25, 26, 29) mit einem zweiten Verbindungspunkt (27, 30) eines zweiten Streckenelements (25, 26, 29) automatisiert verknüpft wird, wenn sich der erste Verbindungspunkt (27, 30) des ersten Streckenelements (25, 26, 29) innerhalb eines ersten Abstandschwellwerts zu dem zweiten Verbindungspunkt (27, 30) des zweiten Streckenelements (25, 26, 29) befindet.

8. Verfahren nach einem der vorangehenden Ansprüche,
**dadurch gekennzeichnet,**
**dass** ein Weichenelement oder ein Verzweigungselement in das Streckenlayout (43) automatisiert eingefügt wird, wenn ein Verbindungspunkt (27,30) eines ersten Streckenelements (25, 26, 29) mit jeweils einem Verbindungspunkt (27, 30) von wenigstens zwei weiteren Streckenelementen (25, 26 29) verknüpft ist.

9. Verfahren nach einem der vorangehenden Ansprüche,
**dadurch gekennzeichnet,**
**dass** ein erster Verbindungspunkt (27, 30) eines ersten Streckenelements (25, 26, 29) mit einem zweiten Verbindungspunkt (27, 30) eines zweiten Streckenelements (25, 26, 29) verknüpft wird, wenn der erste Verbindungspunkt (27, 30) innerhalb eines dritten Abstandschwellwertes zu dem zweiten Streckenelement (25, 26, 29) und der zweite Verbindungspunkt (27, 30) innerhalb des dritten Abstandschwellwertes zu dem ersten Streckenelement (25, 26, 29) liegt,

10. Verfahren nach einem der vorangehenden Ansprüche,
**dadurch gekennzeichnet,**
**dass** ein erstes Streckenelement (25, 26, 29) an einem Teilungspunkt (41) in zwei weitere Streckenelemente (25, 26, 29) unterteilt wird, wenn ein Verbindungspunkt (27, 30) eines zweiten Streckenelements (25, 26, 29) innerhalb eines vierten Abstandschwellwertes zu dem ersten Streckenelement (25, 26, 29) aber außerhalb eines fünften Abstandsschwellwertes zu den Verbindungspunkten (27, 30) des ersten Streckenelements (25, 26, 29) liegt, wobei jedes der zwei weiteren Streckenelemente (25, 26, 29) einen Verbindungspunkt (27, 30) von dem ersten Streckenelement (25, 26, 29) erhält und einen weiteren Verbindungspunkt (27, 30) an dem Teilungspunkt (41) erhält, wobei diese weiteren Verbindungspunkte (27, 30) miteinander verknüpft werden,.

11. Verfahren nach einem der vorangehenden Ansprüche,
**dadurch gekennzeichnet,**
**dass** an einem Verbindungspunkt (27, 30) eines Streckenelements (25, 26, 29) eine Tangente (22, 33, 34) an dieses Streckenelement (25, 26, 29) berechnet wird.

12. Verfahren nach Anspruch 11,
**dadurch gekennzeichnet,**
**dass** ein Verzweigungs-, Weichen- und/oder Kreuzungselement automatisch anhand der berechneten Tangenten (32, 33, 34) der beteiligten Verbindungspunkte (27, 30) ausgewählt wird.

13. Verfahren nach einem der vorangehenden Ansprüche,
**dadurch gekennzeichnet,**
**dass** eine Fehlerprüfung durchgeführt wird, in welcher für jedes Streckenelement (25, 26, 29) eine eindeutige und/oder mit verknüpften Streckenelementen (25, 26, 29) kompatible Zuordnung einer Fahrtrichtungsinformation (28) geprüft wird.

14. Verfahren zur Inbetriebnahme einer Produktionsanlage (1) mit wenigstens einer entlang einer Förderstrecke verfahrbaren Transporteinheit (3) und einer Steuerungseinheit (18),
**dadurch gekennzeichnet,**
**dass** mit einem Verfahren nach einem der vorangehenden Ansprüche ein Streckenlayout (43) erzeugt und Daten des Streckenlayouts (43) an die wenigstens eine Transporteinheit (3) und/oder die Steuerungseinheit (18) übergeben werden.

15. Konfigurationseinrichtung (7), mit einem Dateneingang (8) zur Eingabe von CAD-Streckendaten (9) und einem Datenausgang (16) zur Ausgabe eines Streckenlayouts (43), **dadurch gekennzeichnet,**
**dass** eine Verarbeitungseinheit (12) der Konfigurationseinrichtung (7) zur Ausführung eines Verfahrens nach einem der
vorangegangenen Ansprüche ausgebildet und eingerichtet ist.

16. Konfigurationseinrichtung (7) nach Anspruch 15,
**dadurch gekennzeichnet,**
**dass** die CAD-Streckendaten (9) mit je zwei Verbindungspunkten (27, 30) und zusätzlich mit Metadaten versehene Streckenelemente (25, 26, 29) aufweisen

17. Konfigurationseinrichtung (7) nach einem der Ansprüche 15 oder 16,
**dadurch gekennzeichnet,**
**dass** ein Abstandsbestimmungsmittel (36) zur Bestimmung eines Abstands zwischen einem Verbindungspunkt (27, 30) eines Streckenelements (25, 26, 29) und einem weiteren Streckenelement (25, 26, 29) eingerichtet ist.

18. Konfigurationseinrichtung (7) nach einem der Ansprüche 15 bis 17,
**dadurch gekennzeichnet,**
**dass** ein Tangentenberechnungsmittel (35) zur Berechnung einer Tangente (32, 33, 34) in einem Verbindungspunkt (27, 30) eines Streckenelements (25, 26, 29) an das Streckenelement (25, 26, 29) ausgebildet ist.

19. Konfigurationseinrichtung (7) nach einem der Ansprüche 15 bis 18,
**dadurch gekennzeichnet,**
**dass** ein Zuweisungsmittel (42) zur Zuweisung einer Fahrtrichtungsinformation (28) zu einem Streckenelement (25, 26, 29) ausgebildet ist.

20. Produktionsanlage (1) mit wenigstens einer entlang einer Förderstrecke verfahrbaren Transporteinheit (3),
**dadurch gekennzeichnet,**
**dass** die Produktionsanlage (1) eine Konfigurationseinrichtung (7) nach einem der Ansprüche 15 bis 19 umfasst, wobei eine Steuerungseinheit (18) der Produktionsanlage (1) mit der Konfigurationseinrichtung (7) in Steuerverbindung steht und/oder
durch die Konfigurationseinrichtung (7) programmierbar ist.

21. Produktionsanlage (1) nach Anspruch 20,
**dadurch gekennzeichnet,**
**dass** das Streckenlayout (43) und/oder eine zumindest lokal eindimensionale, computerlesbare Beschreibung des logischen Förderflusses an die Steuerungseinheit (18) übergebbar und zu einer Ansteuerung von Transporteinheiten (3) der Produktionsanlage (1) verwendbar ist.

## Claims

1. Method for the computer-assisted simulation of a production plant (1),
wherein the production plant (1) has at least one conveying path (2),
wherein CAD path data (9) are input into a processing unit (12),
the CAD path data (9) are erroneous,
a ruleset comprises rules for correcting errors in the erroneous CAD path data (9),
and a path layout (43) is generated from the CAD path data (9) in a computer-implemented manner,
said layout depicting a logical conveying flow of the conveying path (2) in a computer-readable manner,
wherein the rules are applied to the CAD path data (9) in order to generate the path layout (43) in a computer-implemented manner.

2. Method according to claim 1,
**characterised in that**
path elements (25, 26, 29) of the CAD path data (9) that are sequential in the logical conveying flow are logically linked in order to generate the path layout (43).

3. Method according to any of the preceding claims,
**characterised in that**
an at least locally one-dimensional, computer-readable depiction of the logical conveying flow is derived from the path layout (43).

4. Method according to claim 3,
**characterised in that**
the path layout (43) and/or the at least locally one-dimensional, computer-readable depiction of the logical conveying flow is passed to a control unit (18) and is used or made available for actuating transportation units (3) of the production plant (1).

5. Method according to any of the preceding claims,
**characterised in that**
CAD path data (9) are input into a processing unit (12), **in that** the CAD path data (9) are displayed in a virtual reality (13) in an automated manner, and **in that** actuation data (15) are made available in an automated manner at an interface (21) configured for at least one element out of the group of material flow computer (17), superordinate control unit (18), external simulation unit (19) and bill of materials/calculation unit (20).

6. Method according to any of the preceding claims,
**characterised in that**
CAD path data (9) are input into a processing unit (12), the CAD path data (9) comprising at least path elements (25, 26, 29) from which the conveying path is formed, and **in that** the path elements (25, 26, 29) are linked in an automated manner using a ruleset to form a path layout (43) and are made available for a computer-assisted simulation of the conveying path (2).

7. Method according to any of the preceding claims,
**characterised in that**
a first connection point (27, 30) of a first path element (25, 26, 29) is linked to a second connection point (27, 30) of a second path element (25, 26, 29) in an automated manner when the first connection point (27, 30) of the first path element (25, 26, 29) is located within a first distance threshold from the second connection point (27, 30) of the second path element (25, 26, 29).

8. Method according to any of the preceding claims,
**characterised in that**
a points element or a branch element is inserted into the path layout (43) in an automated manner in each case when a connection point (27, 30) of a first path element (25, 26, 29) is linked to a connection point (27, 30) of at least two additional path elements (25, 26, 29)

9. Method according to any of the preceding claims,
**characterised in that**
a first connection point (27, 30) of a first path element (25, 26, 29) is linked to a second connection point (27, 30) of a second path element (25, 26, 29) when the first connection point (27, 30) is positioned within a third distance threshold from the second path element (25, 26, 29) and the second connection point (27, 30) is positioned within the third distance threshold from the first path element (25, 26, 29).

10. Method according to any of the preceding claims,
**characterised in that**
a first path element (25, 26, 29) is split into two additional path elements (25, 26, 29) at a division point (41) when a connection point (27, 30) of a second path element (25, 26, 29) is positioned within a fourth distance threshold from the first path element (25, 26, 29) but beyond a fifth distance threshold from the connection points (27, 30) of the first path element (25, 26, 29), each of the two additional path elements (25, 26, 29) receiving one connection point (27, 30) from the first path element (25, 26, 29) and receiving an additional connection point (27, 30) at the division point (41), said additional connection points (27, 30) being linked together.

11. Method according to any of the preceding claims,
**characterised in that**
at a connection point (27, 30) of a path element (25, 26, 29), a tangent (22, 33, 34) to this path element (25, 26, 29) is calculated.

12. Method according to claim 11,
**characterised in that**
a branch, points and/or intersection element is automatically selected on the basis of the calculated tangents (32, 33, 34) of the connection points (27, 30) involved.

13. Method according to any of the preceding claims,
**characterised in that**
an error check is carried out, in which an unambiguous assignment of a piece of direction of travel information (28) and/or an assignment thereof compatible with linked path elements (25, 26, 29) is checked for each path element (25, 26, 29).

14. Method for commissioning a production plant (1) comprising at least one transportation unit (3), which can travel along a conveying path, and a control unit (18), **characterised in that**
using a method according to any of the preceding claims, a path layout (43) is generated and data of the path layout (43) are passed to the at least one transportation unit (3) and/or to the control unit (18).

15. Configuration device (7) comprising a data input (8) for inputting CAD path data (9) and a data output (16) for outputting a path layout (43),
**characterised in that**
a processing unit (12) of the configuration device (7) is configured and set up to carry out a method according to any of the preceding claims.

16. Configuration device (7) according to claim 15,
**characterised in that**
the CAD path data (9) comprise path elements (25, 26, 29) each provided with two connection points (27, 30) and additionally with metadata.

17. Configuration device (7) according to any of claims 15 or 16,
**characterised in that**
a distance determination means (36) is set up to determine a distance between a connection point (27, 30) of a path element (25, 26, 29) and an additional path element (25, 26, 29).

18. Configuration device (7) according to any of claims 15 to 17,
**characterised in that**
a tangent calculation means (35) is configured to calculate a tangent (32, 33, 34) to a path element (25, 26, 29) in a connection point (27, 30) of the path element (25, 26, 29).

19. Configuration device (7) according to any of claims 15 to 18,
**characterised in that**
an allocation means (42) is configured to allocate a piece of direction of travel information (28) to a path element (25, 26, 29).

20. Production plant (1) comprising at least one transportation unit (3), which can travel along a conveying path,
**characterised in that**
the production plant (1) comprises a configuration device (7) according to any of claims 15 to 19, a control unit (18) of the production plant (1) being in a control connection with the configuration device (7)
and/or
being programmable by the configuration device (7).

21. Production plant (1) according to claim 20,
**characterised in that**
the path layout (43) and/or at an at least locally one-dimensional, computer-readable depiction of the logical conveying flow can be passed to the control unit (18) and used for actuating transportation units (3) of the production plant (1).

## Revendications

1. Procédé de simulation assistée par ordinateur d'une installation de production (1), dans lequel l'installation de production (1) présente au moins un parcours de transport (2),
dans lequel
des données de parcours CAO (9) sont lues dans une unité de traitement (12),
les données de parcours CAO (9) comportent des erreurs,
un ensemble de règles présente des règles pour la correction d'erreurs des données de parcours CAO (9) comportant des erreurs et,
à partir des données de parcours CAO (9), un schéma de parcours (43) est généré de manière implémentée par ordinateur, qui décrit un flux de transport logique du parcours de transport (2) de manière lisible par ordinateur,
dans lequel les règles sont appliquées de manière implémentée par ordinateur aux données de parcours CAO (9) afin de générer le schéma de parcours (43).

2. Procédé selon la revendication 1,
**caractérisé en ce**
**que**, pour générer le schéma de parcours (43), des éléments de parcours (25, 26, 29) successifs dans le flux de transport logique sont liés logiquement aux données de parcours CAO (9).

3. Procédé selon l'une des revendications précédentes,
**caractérisé en ce**
**qu'**une description au moins localement unidimensionnelle, lisible par ordinateur, du flux de transport logique est dérivée du schéma de parcours (43).

4. Procédé selon la revendication 3,
**caractérisé en ce**
**que** le schéma de parcours (43) et/ou la description au moins localement unidimensionnelle, lisible par ordinateur, du flux de transport logique est transféré(e) à une unité de commande (18) et utilisé(e) ou mis(e) à disposition pour une commande d'unités de transport (3) de l'installation de production (1).

5. Procédé selon l'une des revendications précédentes,
**caractérisé en ce**
**que** des données de parcours CAO (9) sont lues dans une unité de traitement (12), que les données de parcours CAO (9) sont représentées de manière automatisée dans une réalité virtuelle (13) et que des données de commande (15) sont mises à disposition de manière automatisée sur une interface (21) conçue pour au moins un élément du groupe constitué par un calculateur de flux de matière (17), une unité de commande supérieure (18), une unité de simulation externe (19) et une unité de nomenclature/de calcul (20).

6. Procédé selon l'une des revendications précédentes,
**caractérisé en ce**
**que** des données de parcours CAO (9) sont lues dans une unité de traitement (12), les données de parcours CAO (9) comprenant au moins des éléments de parcours (25, 26, 29) dont le parcours de transport est formé, et que les éléments de parcours (25, 26, 29) sont liés de manière automatisée par un ensemble de règles pour former un schéma de parcours (43) et mis à disposition pour une simulation assistée par ordinateur du parcours de transport (2).

7. Procédé selon l'une des revendications précédentes,
**caractérisé en ce**
**qu'**un premier point de liaison (27, 30) d'un premier élément de parcours (25, 26, 29) est relié de manière automatisée à un deuxième point de liaison (27, 30) d'un deuxième élément de parcours (25, 26, 29) lorsque le premier point de liaison (27, 30) du premier élément de parcours (25, 26, 29) se trouve en dedans d'une première valeur seuil de distance par rapport au deuxième point de liaison (27, 30) du deuxième élément de parcours (25, 26, 29).

8. Procédé selon l'une des revendications précédentes,
**caractérisé en ce**
**qu'**un élément d'aiguillage ou un élément de bifurcation est inséré de manière automatisée dans le schéma de parcours (43) lorsqu'un point de liaison (27, 30) d'un premier élément de parcours (25, 26, 29) est lié à un point de liaison respectif (27, 30) d'au moins deux autres éléments de parcours (25, 26, 29).

9. Procédé selon l'une des revendications précédentes,
**caractérisé en ce**
**qu'**un premier point de liaison (27, 30) d'un premier élément de parcours (25, 26, 29) est relié à un deuxième point de liaison (27, 30) d'un deuxième élément de parcours (25, 26, 29) lorsque le premier point de liaison (27, 30) se trouve en dedans d'une troisième valeur seuil de distance par rapport au deuxième élément de parcours (25, 26, 29) et le deuxième point de liaison (27, 30) se trouve en dedans de la troisième valeur seuil de distance par rapport au premier élément de parcours (25, 26, 29).

10. Procédé selon l'une des revendications précédentes,
**caractérisé en ce**
**qu'**un premier élément de parcours (25, 26, 29) est divisé en deux autres éléments de parcours (25, 26, 29) à un point de séparation (41) lorsqu'un point de liaison (27, 30) d'un deuxième élément de parcours (25, 26, 29) se trouve en dedans d'une quatrième valeur seuil de distance par rapport au premier élément de parcours (25, 26, 29), 29) mais en dehors d'une cinquième valeur seuil de distance par rapport aux points de liaison (27, 30) du premier élément de parcours (25, 26, 29), chacun des deux autres éléments de parcours (25, 26, 29) recevant un point de liaison (27, 30) du premier élément de parcours (25, 26, 29) et recevant un autre point de liaison (27, 30) au point de division (41), ces autres points de liaison (27, 30) étant liés entre eux.

11. Procédé selon l'une des revendications précédentes,
**caractérisé en ce**
**qu'**à un point de liaison (27, 30) d'un élément de parcours (25, 26, 29), une tangente (22, 33, 34) à cet élément de parcours (25, 26, 29) est calculée.

12. Procédé selon la revendication 11,
**caractérisé en ce**
**qu'**un élément de bifurcation, d'aiguillage et/ou de croisement est sélectionné automatiquement à partir des tangentes (32, 33, 34) calculées aux points de liaison concernés (27, 30).

13. Procédé selon l'une des revendications précédentes,
**caractérisé en ce**
**qu'**un contrôle d'erreur est effectué, dans lequel, pour chaque élément de parcours (25, 26, 29), une association unique et/ou compatible avec des éléments de parcours liés (25, 26, 29) à une information de sens de déplacement (28) est vérifiée.

14. Procédé de mise en service d'une installation de production (1) comprenant au moins une unité de transport (3) déplaçable le long d'un parcours de transport et une unité de commande (18),
**caractérisé en ce**
**qu'**un schéma de parcours (43) est généré avec un procédé selon l'une des revendications précédentes et que les données du schéma de parcours (43) sont transférées à ladite au moins une unité de transport (3) et/ou à l'unité de commande (18).

15. Dispositif de configuration (7), comportant une entrée de données (8) pour l'entrée de données de parcours CAO (9) et une sortie de données (16) pour la sortie d'un schéma de parcours (43),
**caractérisé en ce**
**qu'**une unité de traitement (12) du dispositif de configuration (7) est conçue et installée pour mettre en œuvre un procédé selon l'une des revendications précédentes.

16. Dispositif de configuration (7) selon la revendication 15,
**caractérisé en ce**
**que** les données de parcours CAO (9) présentent des éléments de parcours (25, 26, 29) pourvus chacun de deux points de liaison (27, 30) et en outre de métadonnées.

17. Dispositif de configuration (7) selon l'une des revendications 15 ou 16,
**caractérisé en ce**
**qu'**un moyen de détermination de distance (36) est installé pour déterminer une distance entre un point de liaison (27, 30) d'un élément de parcours (25, 26, 29) et un autre élément de parcours (25, 26, 29).

18. Dispositif de configuration (7) selon l'une des revendications 15 à 17,
**caractérisé en ce**
**qu'**un moyen de calcul de tangente (35) est conçu pour calculer une tangente (32, 33, 34) en un point de liaison (27, 30) d'un élément de parcours (25, 26, 29) à l'élément de parcours (25, 26, 29).

19. Dispositif de configuration (7) selon l'une des revendications 15 à 18,
**caractérisé en ce**
**qu'**un moyen d'affectation (42) est conçu pour affecter une information de sens de déplacement (28) à un élément de parcours (25, 26, 29).

20. Installation de production (1) comprenant au moins une unité de transport (3) déplaçable le long d'un parcours de transport,
**caractérisée en ce**
**que** l'installation de production (1) comprend un dispositif de configuration (7) selon l'une des revendications 15 à 19, une unité de commande (18) de l'installation de production (1) étant en liaison de commande avec le dispositif de configuration (7) et/ou pouvant être programmée par le dispositif de configuration (7).

21. Installation de production (1) selon la revendication 20,
**caractérisée en ce**
**que** le schéma de parcours (43) et/ou une description au moins localement unidimensionnelle, lisible par ordinateur, du flux logique de transport peuvent être transférés à l'unité de commande (18) et être utilisés pour commander des unités de transport (3) de l'installation de production (1).
